# EUROPÄISCHE PATENTANMELDUNG

(11) **EP 3 916 827 A1**
(43) Veröffentlichungstag der Anmeldung: **01.12.2021**
(21) Anmeldenummer: 20177599.6
(22) Anmeldetag: 29.05.2020
(51) Int. Cl.: H01M 2/02, H01M 2/26, H01M 10/052, H01M 10/0583, H01M 10/0587

(54) **LITHIUM-IONEN-ZELLE MIT HOHER ENERGIEDICHTE**

(71) Anmelder: VARTA Microbattery GmbH, 73479 Ellwangen Jagst (DE)
(72) Erfinder: Elmer, Martin, 73479 Ellwangen (DE); Ensling, David, 73479 Ellwangen (DE); Gottschalk, Michael, 73433 Aalen (DE); Pompetzki, Markus, 74405 Gaildorf (DE)
(74) Vertreter: Patentanwaltskanzlei Cartagena

(57) **Zusammenfassung**

Bekannt ist eine Lithium-lonen-Zeite (100), die einen bandförmigen Elektroden-Separator-Verbund (104) mit der Sequenz Anode (120) / Separator (118) / Kathode (130) umfasst, wobei die Anode (120) und die Kathode (130) jeweils einen bandförmigen Stromkollektor (110, 115) mit einem ersten und einem zweiten Längsrand (110e, 115e) und zwei Endstücken umfassen und die Stromkollektoren jeweils einen bandförmigen Hauptbereich (122,126),der miteiner Schicht aus dem jeweiligen Elektrodenmaterial (123, 125) beladen ist, sowie einen freien Randstreifen (121, 117), der sich entlang des ersten Längsrands (110e, 115e) erstreckt und der nicht mit dem Elektrodenmaterial beladen ist, aufweisen. Der Verbund (104) liegt in Form eines Wickels mit zwei endständigen Stirnseiten vor oder ist Bestandteil eines Stapels, der aus zwei oder mehr identischen Elektroden-Separator-Verbünden gebildet ist und gleichfalls zwei endständige Seiten aufweist, und ist, gegebenenfalls mitsamt dem oder den weiteren identischen Elektroden-Separator-Verbünden des Stapels, von einem Gehäuse umschlossen. Die Anode (120) und die Kathode (130) sind innerhalb des Verbunds (104) versetzt angeordnet, so dass der erste Längsrand (110e) des Anodenstromkollektors aus einer der endständigen Stirnseiten oder Seiten des Stapels und der erste Längsrand (115e) des Kathodenstromkollektors aus der anderen der endständigen Stirnseiten oder Seiten des Stapels austritt. Die Zelle (100) weist eine metallische Kontaktplatte (101a, 102,155) auf, mit der einer der ersten Längsränder (110e, 115e) in unmittelbarem Kontakt steht und die mit diesem durch Verschweißung verbunden ist. Es wird vorgeschlagen, dass ein Teil (101a) des Gehäuses als Kontaktplatte dient oder aber eine Kontaktplatte (102, 155) einen Teil des Gehäuses bildet.

## Beschreibung

Die nachstehend beschriebene Erfindung betrifft eine Lithium-Ionen-Zelle, die einen Elektroden-Separator-Verbund umfasst.

Elektrochemische Zellen sind dazu in der Lage, gespeicherte chemische Energie durch eine Redoxreaktion in elektrische Energie umzuwandeln. Sie umfassen in der Regel eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen Ionen leitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und damit die Zelle wiederzu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Die weit verbreiteten sekundären Lithium-Ionen-Zellen basieren auf dem Einsatz von Lithium, welches in Form von Ionen zwischen den Elektroden der Zelle hin und herwandern kann. Die Lithium-Ionen-Zellen zeichnen sich dabei durch eine vergleichsweise hohe Energiedichte aus. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür oftmals Partikel auf Kohlenstoffbasis, wie beispielsweise graphitischer Kohlenstoff, eingesetzt. Es können auch andere, nicht-graphitische Kohlenstoffmaterialien verwendet werden, die zur Interkalation von Lithium geeignet sind. Darüber hinaus können auch metallische und halbmetallische Materialien, die mit Lithium legierbar sind, zum Einsatz kommen. So sind beispielsweise die Elemente Zinn, Aluminium, Antimon und Silizium in der Lage, mit Lithium intermetallische Phasen zu bilden. Als Aktivmaterialien für die positive Elektrode können beispielsweise Lithiumcobaltoxid (LiCoO₂), Lithiummanganoxid (LiMn₂O₄), Lithiumtitanat (Li₄Ti₅P₁₂) oder Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der mit einem Aktivmaterial beschichtet ist. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden einen Elektrodenbinder (z. B. Polyvinylidenfluorid (PVDF) oder ein anderes Polymer, beispielsweise Carboxymethylzellulose) umfassen. Dieser gewährleistet die mechanische Stabilität der Elektroden und häufig auch die Haftung des Aktivmaterials auf den Stromkollektoren. Weiterhin können die Elektroden leitfähigkeitsverbessernde Additive und andere Zusätze enthalten.

Als Elektrolyten umfassen Lithium-Ionen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden werden bei der Herstellung einer Lithium-Ionen-Zelle mit einem oder mehreren Separatoren zu einem Verbundkörper kombiniert. Meist werden die Elektroden und Separatoren hierbei durch Lamination oder durch Verklebung miteinander verbunden. Die grundsätzliche Funktionsfähigkeit der Zelle kann dann durch Tränkung des Verbunds mit dem Elektrolyten hergestellt werden.

In vielen Ausführungsformen ist der Verbundkörper eben ausgebildet sein, so dass mehrere Verbundkörper flach aufeinander gestapelt werden können. Sehr häufig wird der Verbundkörper aber in Form eines Wickels gebildet oder zu einem Wickel verarbeitet.

In der Regel umfasst der Verbundkörper, unabhängig davon ob gewickelt oder nicht, die Sequenz positive Elektrode / Separator / negative Elektrode. Häufig werden Verbundkörper als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt.

Für Anwendungen im Automobilbereich, für E-Bikes oder auch für andere Anwendungen mit hohem Energiebedarf wie z.B. in Werkzeugen werden Lithium-Ionen-Zellen mit möglichst hoher Energiedichte benötigt die gleichzeitig in der Lage sind, mit hohen Strömen beim Laden und Entladen belastet zu werden. Solche Zellen sind beispielsweise in der WO 2017/215900 A1 beschrieben.

Häufig sind Zellen für die genannten Anwendungen als zylindrische Rundzellen ausgebildet, beispielsweise mit dem Formfaktor 21 x 70 (Durchmesser mal Höhe in mm) Zellen dieser Art umfassen stets einen Verbundkörper in Form eines Wickels. Moderne Lithium-Ionen-Zellen dieses Formfaktors können bereits eine Energiedichte von bis zu 270 Wh/kg erreichen. Diese Energiedichte wird allerdings nur als Zwischenschritt angesehen. Vom Markt werden bereits Zellen mit noch höheren Energiedichten gefordert.

Bei der Entwicklung verbesserter Lithium-Ionen-Zellen sind allerdings noch andere Faktoren zu beachten als nur die Energiedichte. Außerordentlich wichtige Parameter sind auch der Innenwiderstand der Zellen, der möglichst niedrig gehalten werden sollte, um Leistungsverluste beim Laden und Entladen zu verringern, sowie die thermische Anbindung der Elektroden, die für eine Temperaturregulierung der Zelle essentiell sein kann. Auch diese Parameter sind für zylindrische Rundzellen, die einen Verbundkörper in Form eines Wickels enthalten, sehr wichtig. Beim Schnellladen von Zellen können aufgrund von Leistungsverlusten Wärmestaus in den Zellen auftreten, die zu massiven thermo-mechanischen Belastungen und in der Folge zu Verformungen und Beschädigungen der Zellstruktur führen können. Das Risiko besteht verstärkt dann, wenn die elektrische Anbindung der Stromkollektoren über separate elektrische, an die Stromkollektoren geschweißte Ableiterfahnen erfolgt, die axial aus gewickelten Verbundkörpern austreten, da bei starken Belastungen beim Laden oder Entladen eine Erwärmung lokal an diesen Ableiterfahnen auftreten kann.

Der vorliegenden Erfindung lag die Aufgabe zugrunde, Lithium-Ionen-Zellen bereitzustellen, die sich durch eine gegenüber dem Stand der Technik verbesserte Energiedichte auszeichnen und die gleichzeitig hervorragende Charakteristiken bezüglich ihres Innenwiderstands und ihrer passiven Entwärmungsfähigkeiten besitzen.

Diese Aufgabe wird durch die Lithium-Ionen-Zelle mit den Merkmalen des Anspruchs 1 sowie das Verfahren mit den Merkmalen des Anspruchs 9 gelöst. Bevorzugte Ausgestaltungen dieser Zelle und dieses Verfahrens ergeben sich aus den abhängigen Ansprüchen.

Die erfindungsgemäße Lithium-Ionen-Zelle zeichnet sich stets durch die unmittelbar folgenden Merkmale a. bis i. aus:
a. Die Zelle umfasst einen bandförmigen Elektroden-Separator-Verbund mit der Sequenz Anode / Separator / Kathode.
b. Die Anode umfasst einen bandförmigen Anodenstromkollektor mit einem ersten und einem zweiten Längsrand und zwei Endstücken.
c. Der Anodenstromkollektor weist einen bandförmigen Hauptbereich, der mit einer Schicht aus negativem Elektrodenmaterial beladen ist, sowie einen freien Randstreifen, der sich entlang des ersten Längsrands erstreckt und der nicht mit dem Elektrodenmaterial beladen ist, auf.
d. Die Kathode umfasst einen bandförmigen Kathodenstromkollektor mit einem ersten und einem zweiten Längsrand und zwei Endstücken.
e. Der Kathodenstromkollektor weist einen bandförmigen Hauptbereich, der mit einer Schicht aus positivem Elektrodenmaterial beladen ist, sowie einen freien Randstreifen, der sich entlang des ersten Längsrands erstreckt und der nicht mit dem Elektrodenmaterial beladen ist, auf.
f. Der Elektroden-Separator-Verbund liegt in Form eines Wickels mit zwei endständigen Stirnseiten vor oder ist Bestandteil eines Stapels, der aus zwei oder mehr identischen Elektroden-Separator-Verbünden gebildet ist und gleichfalls zwei endständige Seiten aufweist.
g. Der Elektroden-Separator-Verbund ist, gegebenenfalls mitsamt dem oder den weiteren identischen Elektroden-Separator-Verbünden des Stapels, von einem Gehäuse umschlossen.
h. Die Anode und die Kathode sind innerhalb des Elektroden-Separator-Verbunds versetzt angeordnet, so dass der erste Längsrand des Anodenstromkollektors aus einer der endständigen Stirnseiten oder Seiten des Stapels und der erste Längsrand des Kathodenstromkollektors aus der anderen der endständigen Stirnseiten oder Seiten des Stapels austritt.
h. Die Zelle weist eine metallische Kontaktplatte auf, mit der einer der ersten Längsränder, bevorzugt der Länge nach, in unmittelbarem Kontakt steht.
i. Die Kontaktplatte ist mit diesem Längsrand durch Verschweißung verbunden.

Besonders bevorzugt umfasst die Zelle zwei Kontaktplatten, von denen eine mit dem ersten Längsrand des Anodenstromkollektors und die andere mit dem ersten Längsrand des Kathodenstromkollektors in unmittelbarem Kontakt steht, wobei die Kontaktplatten und die damit in Kontakt stehenden Längsränder jeweils durch Verschweißung miteinander verbunden sind.

Die Stromkollektoren dienen dazu, im Elektrodenmaterial enthaltene elektrochemisch aktive Komponenten möglichst großflächig elektrisch zu kontaktieren. Bevorzugt bestehen die Stromkollektoren als einem Metall oder sind zumindest oberflächlich metallisiert. Als Metall für den Anodenstromkollektor eignen sich beispielsweise Kupfer oder Nickel oder auch andere elektrisch leitfähige Materialien, insbesondere Kupfer- und Nickellegierungen oder mit Nickel beschichtete Metalle. Auch Edelstahl kommt grundsätzlich in Frage. Als Metall für den Kathodenstromkollektor eignen sich beispielsweise Aluminium oder auch andere elektrisch leitfähige Materialien, insbesondere auch Aluminiumlegierungen.

Bevorzugt handelt es sich bei dem Anodenstromkollektor und/oder dem Kathodenstromkollektor jeweils um eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige Schäume verwendet werden.

Die Stromkollektoren sind bevorzugt beidseitig mit dem jeweiligen Elektrodenmaterial beladen.

In den freien Randstreifen ist das Metall des jeweiligen Stromkollektors frei von dem jeweiligen Elektrodenmaterial. Bevorzugt ist das Metall des jeweiligen Stromkollektors dort unbedeckt, so dass es für elektrische Kontaktierungen, beispielsweise durch Verschweißung, zur verfügung steht.

In einigen Ausführungsformen kann das Metall des jeweiligen Stromkollektors in den freien Randstreifen aber auch mit einem Stützmaterial beschichtet sein, das thermisch beständiger als der damit beschichtete Stromkollektor ist.

"Thermisch beständiger" soll hierbei bedeuten, dass das Stützmaterial bei einer Temperatur, bei der das Metall des Stromkollektors schmilzt, einen festen Zustand behält. Es weist also entweder einen höheren Schmelzpunkt als das Metall auf oder aber es sublimiert oder zersetzt sich erst bei einer Temperatur, bei der das Metall bereits geschmolzen ist.

Bevorzugt weisen sowohl der Anodenstromkollektor als auch der Kathodenstromkollektor jeweils mindestens einen freien Randstreifen auf, der nicht mit dem jeweiligen Elektrodenmaterial beladen ist. In einer Weiterbildung ist es bevorzugt, dass sowohl der mindestens eine freie Randstreifen des Anodenstromkollektors als auch der mindestens eine freie Randstreifen des Kathodenstromkollektors mit dem Stützmaterial beschichtet sind. Besonders bevorzugt wird für jeden der Bereiche das gleiche Stützmaterial verwendet.

Das im Rahmen der vorliegenden Erfindung einsetzbare Stützmaterial kann grundsätzlich ein Metall oder eine Metalllegierung sein, sofern dieses oder diese einen höheren Schmelzpunkt aufweist als das Metall, aus dem die Oberfläche besteht, die mit dem Stützmaterial beschichtet ist. In vielen Ausführungsformen zeichnet sich die erfindungsgemäße Lithium-Ionen-Zelle allerdings bevorzugt durch mindestens eines der unmittelbar folgenden zusätzlichen Merkmale a. bis d. aus:
a. Bei dem Stützmaterial handelt es sich um ein nichtmetallisches Material.
b. Bei dem Stützmaterial handelt es sich um ein elektrisch isolierendes Material.
c. Bei dem nichtmetallischen Material handelt es sich um ein keramisches Material, ein glaskeramisches Material oder um ein Glas.
d. Bei dem keramischen Material handelt es sich um Aluminiumoxid (Al₂O₃), um Titanoxid (TiO₂), um Titannitrid (TiN), um Titanaluminiumnitrid (TiAlN) oder um Titancarbonitrid (TiCN).

Erfindungsgemäß ist das Stützmaterial besonders bevorzugt gemäß dem unmittelbar vorstehenden Merkmal b. und insbesondere bevorzugt gemäß dem unmittelbar vorstehenden Merkmal d. ausgebildet.

Der Begriff nichtmetallisches Material umfasst insbesondere Kunststoffe, Gläser und keramische Materielien.

Der Begriff elektrisch solierendes Material ist vorliegend breit auszulegen. Er umfasst grundsätzlich jedes elektrisch isolierende Material, insbesondere auch besagte Kunststoffe.

Der Begriff keramisches Material ist vorliegend breit auszulegen. Insbesondere sind hierunter Carbide, Nitride, Oxide, Silicide oder Mischungen und Derivate dieserVerbindungen zu verstehen.

Mit dem Begriff "glaskeramisches Material" ist insbesondere ein Material gemeint, das kristalline Teilchen umfasst, die in eine amorphe Glasphase eingebettet sind.

Der Begriff "Glas" meint grundsätzlich jedes anorganische Glas, das den oben definierten Kriterien an thermische Stabilität genügt und das gegenüber einem gegebenenfalls in der Zelle anwesenden Elektrolyten chemisch stabil ist.

Besonders bevorzugt besteht der Anodenstromkollektor aus Kupfer oder einer Kupferlegierung während gleichzeitig der Kathodenstromkollektor aus Aluminium oder einer Aluminiumlegierung besteht und das Stützmaterial Aluminiumoxid oder Titanoxid ist.

Es kann weiterhin bevorzugt sein, dass freie Randstreifen des Anoden- und/oder des Kathodenstromkollektors mit einem Streifen aus dem Stützmaterial beschichtet sind.

Die bandförmigen Hauptbereiche von Anodenstromkollektor und Kathodenstromkollektor erstrecken sich bevorzugt parallel zu den jeweiligen Längsrändern der Stromkollektoren. Bevorzugt erstrecken sich die bandförmigen Hauptbereiche über mindestens 90 %, besonders bevorzugt über mindestens 95 %, der Flächen von Anodenstromkollektor und Kathodenstromkollektor.

In einigen bevorzugten Ausführungsformen wird das Stützmaterial neben den bandförmigen Hauptbereichen aufgebracht, bedeckt die freie Bereiche dabei jedoch nicht vollständig. Beispielsweise wird es in Form eines Streifens oder einer Linie entlang eines Längsrands von Anoden- und/oder Kathodenstromkollektor aufgebracht, so dass es den jeweiligen Randstreifen nur teilweise bedeckt. Unmittelbar entlang dieses Längsrands kann dabei ein langgestreckter Teilbereich des freien Randstreifens unbedeckt bleiben.

Besonders bevorzugt ist die erfindungsgemäße Lithium-Ionen-Zelle eine sekundäre Lithium-Ionen-Zelle. Für deren Anode und Kathode können im Grunde sämtliche für Lithium-Ionen-Zellen bekannten Elektrodenmaterialien verwendet werden.

In der negativen Elektrode kommen als Aktivmaterialien bevorzugt Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich können oder Lithiumtitanat (Li₄Ti₅O₁₂) und auch metallische und halbmetallische Materialien, die mit Lithium legierbar sind, zum Einsatz kommen, beispielsweise unter Verwendung der Elemente Zinn, Antimon und Silizium, die in der Lage sind, mit Lithium intermetallische Phasen zu bilden. Auch diese Materialien kommen bevorzugt in Partikelform zum Einsatz. Für die positive Elektrode können als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}A_{0.05})_{0.89}O₂ oder Li₁₊ₓM-O Verbindungen und/oder Mischungen der genannten Materialien können eingesetzt werden.

Als elektrochemisch inaktive Komponenten können die Elektrodenmaterialien beispielsweise einen Elektrodenbinder und ein Leitmittel enthalten. Die partikelförmigen Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid, Polyacrylatoder Carboxymethylzellulose. Übliche Leitmittel sind Ruß und Metallpulver.

Weiterhin umfasst die Zelle bevorzugt einen Elektrolyten, insbesondere auf der Basis mindestens eines Lithiumsalzes wie beispielsweise Lithiumhexafluorophosphat, das in einem organischen Lösungsmittel gelöst vorliegt (z. B. in einer Mischung organischer Carbonate).

Bei dem Separator handelt es sich beispielsweise um eine elektrisch isolierende Kunststofffolie, die von dem Elektrolyten durchdrungen werden kann, beispielsweise weil sie Mikroporen aufweist. Die Folie kann beispielsweise aus einem Polyolefin oder aus einem Polyetherketon gebildet sein. Auch Vliese und Gewebe aus solchen Kunststoffmaterialien können als Separator zum Einsatz kommen.

Bei der Herstellung von Verbünden aus Elektroden und Separatoren wird üblicherweise darauf geachtet, dass es nicht zu einem einseitigen Überstehen entgegengesetzt gepolter Stromkollektoren kommt, da dies die Kurzschlussgefahr erhöhen kann. Bei der beschriebenen versetzten Anordnung von Anode und Kathode ist die Kurzschlussgefahr jedoch minimiert, da die entgegengesetzt gepolten Stromkollektoren aus sich gegenüberliegenden Stirnseiten des Wickels oder des Stapels austreten.

Den aus der versetzten Anordnung resultierenden Überstand der Stromkollektoren kann man sich zunutze machen, indem man sie mittels eines entsprechenden Stromableiters bevorzugt über ihre gesamte Länge kontaktiert. Als Stromableiter dient erfindungsgemäß die erwähnte Kontaktplatte. Eine solche elektrische Kontaktierung senkt den Innenwiderstand innerhalb der erfindungsgemäßen Zelle sehr deutlich. Die beschriebene Anordnung kann das Auftreten großer Ströme somit sehr gut abfangen. Mit minimiertem Innenwiderstand reduzieren sich thermische Verluste bei hohen Strömen. Zudem wird die Abfuhr thermischer Energie aus dem gewickelten Elektroden-Separator-Verbund begünstigt. Bei starken Belastungen tritt eine Erwärmung nicht lokal sondern gleichmäßig verteilt auf.

Das Gehäuse der erfindungsgemäßen Lithium-Ionen-Zelle umschließt den Elektroden-Separator-Verbund oder den Stapel aus den identischen Elektroden-Separator-Verbünden bevorzugt gas- und/oder flüssigkeitsdicht.

Bei Verwendung von Kontaktplatten ist es in der Regel erforderlich, die Kontaktplatten elektrisch mit dem Gehäuse zu verbinden oder aber mit elektrischen Leitern, die aus dem Gehäuse herausgeführt sind. Beispielsweise können die Kontaktplatten hierzu mit den erwähnten Gehäuseteilen unmittelbar oder über elektrische Leiter verbunden werden.

Wenn der Elektroden-Separator-Verbund Bestandteil des Stapels aus den zwei oder mehr identischen Elektroden-Separator-Verbünden ist, so sind die identischen Elektroden-Separator-Verbünde innerhalb des Stapels derart angeordnet, dass die Längsränder ihrer Anodenstromkollektoren und die Längsränder ihrer Kathodenstromkollektoren jeweils aus der gleichen Seite des Stapels austreten. So können gleichzeitig alle Anodenstromkollektoren und alle Kathodenstromkollektoren mit der jeweils gleichen Kontaktplatte elektrisch kontaktiert werden.

Besonders zeichnet sich die erfindungsgemäße Zelle durch das unmittelbarfolgende Merkmalj. aus:
j. ein Teil des Gehäuses dient als die Kontaktplatte und/oder die Kontaktplatte bildet einen Teil des Gehäuses, das den Elektroden-Separator-Verbund umschließt.

Diese Ausführungsform ist besonders vorteilhaft. Zum einen ist sie aus Entwärmungsaspekten optimal. Innerhalb des Wickels entstehende Wärme kann über die Längsränder direkt ans Gehäuse abgegeben werden. Zum anderen lässt sich auf diese Weise das Innenvolumen eines Gehäuses mit vorgegebenen Außenmaßen nahezu optimal ausnutzen. Jede separate Kontaktplatten und jeder separate elektrische Leiter zum Verbinden der Kontaktplatten mit dem Gehäuse benötigt Raum innerhalb des Gehäuses und trägt zum Gewicht der Zelle bei. Bei Verzicht auf solche separaten Komponenten steht dieser Raum für Aktivmaterial zur Verfügung. So kann die Energiedichte erfindungsgemäßer Zellen weiter erhöht werden.

In einer ersten Variante der Erfindung zeichnet sich die erfindungsgemäße Zelle durch mindestens eines der unmittelbar folgenden Merkmale a. und b., besonders bevorzugt durch eine Kombination der beiden Merkmale, aus:
a. Das Gehäuse umfasst ein becherförmiges erstes Gehäuseteil mit einem Boden und einer umlaufenden Seitenwand und einer Öffnung und ein zweites Gehäuseteil, das die Öffnung verschließt.
b. Die Kontaktplatte ist der Boden des ersten Gehäuseteils.

Bevorzugt ist das Gehäuse zylindrisch oder prismatisch ausgebildet. Das becherförmige erste Gehäuseteil weist entsprechend bevorzugt einen kreisförmigen oder rechteckigen Querschnitt auf und das zweite Gehäuseteil sowie der Boden des ersten Gehäuseteils sind entsprechend bevorzugt kreisförmig oder rechteckig ausgebildet.

Wenn der Elektroden-Separator-Verbund in Form des Wickels mit den zwei endständigen Stirnseiten vorliegt, ist das Gehäuse bevorzugt zylindrisch. Ist der Elektroden-Separator-Verbund hingegen Bestandteil des Stapels aus den zwei oder mehr identischen Elektroden-Separator-Verbünden, so ist das Gehäuse bevorzugt prismatisch ausgebildet.

Wenn das Gehäuse zylindrisch ausgebildet ist, dann umfasst es in aller Regel einen zylindrischen Gehäusemantel sowie ein kreisförmiges Oberteil und ein kreisförmiges Unterteil, wobei in dieser Variante das erste Gehäuseteil den Gehäusemantel und das kreisförmige Unterteil umfasst während das zweite Gehäuseteil dem kreisförmigen Oberteil entspricht. Das kreisförmige Oberteil und/oder das kreisförmige Unterteil können als Kontaktplatten dienen.

Wenn das Gehäuse prismatisch ausgebildet ist, dann umfasst das Gehäuse in aller Regel mehrere rechteckige Seitenwände sowie ein polygonales, insbesondere rechteckiges Oberteil und ein polygonales, insbesondere rechteckiges Unterteil, wobei in dieser Variante das erste Gehäuseteil die Seitenwände und das polygonale Unterteil umfasst während das zweite Gehäuseteil dem kreisförmigen polygonalen Oberteil entspricht. Das Oberteil und/oderdas Unterteil können als Kontaktplatten dienen.

Sowohl das erste als auch das zweite Gehäuseteil besteht bevorzugt aus einem elektrisch leitenden Werkstoff, insbesondere aus einem metallischen Werkstoff. Die Gehäuseteile können z.B. unabhängig voneinander aus einem vernickelten Stahlblech oder aus legiertem oder unlegiertem Aluminium bestehen.

In einer bevorzugten Weiterbildung der ersten Variante zeichnet sich die erfindungsgemäße Zelle durch mindestens eines der unmittelbar folgenden Merkmale a. bis e., insbesondere durch eine Kombination der unmittelbar vorstehenden Merkmale a. bis e., aus:
a. Die Zelle weist eine metallische Kontaktplatte auf, mit der der erste Längsrand des Anodenstromkollektors, bevorzugt der Länge nach, in unmittelbarem Kontakt steht und mit der dieser Längsrand durch Verschweißung verbunden ist.
b. Die Zelle weist eine metallische Kontaktplatte auf, mit der der erste Längsrand des Kathodenstromkollektors, bevorzugt der Länge nach, in unmittelbarem Kontakt steht und mit der dieser Längsrand durch Verschweißung verbunden ist.
c. Eine der Kontaktplatten ist der Boden des ersten Gehäuseteils.
d. Die andere der Kontaktplatten ist über einen elektrischen Leiter mit dem zweiten Gehäuseteil verbunden.
e. Die Zelle umfasst eine Dichtung, welche das erste und das zweite Gehäuseteil elektrisch voneinander isoliert.

Bei dieser Ausführungsform können zum Umschließen des Elektroden-Separator-Verbunds herkömmliche Gehäuseteile verwendet werden. Es wird kein Platz für elektrische Leiter verschwendet, die zwischen dem Boden und dem Elektroden-Separator-Verbund angeordnet werden. Eine separate Kontaktplatte wird bodenseitig nicht benötigt. Zum Schließen des Gehäuses kann die elektrisch isolierende Dichtung auf einen Rand des zweiten Gehäuseteils aufgezogen werden. Die Baugruppe aus dem zweiten Gehäuseteil und der Dichtung kann in die Öffnung des ersten Gehäuseteils eingesetzt und dort mechanisch fixiert werden, beispielsweise mittels eines Bördelvorgangs.

In einer besonders bevorzugten Ausführungsform der ersten Variante kann auch das zweite Gehäuseteil als Kontaktplatte dienen. In dieser Ausführungsform zeichnetsich die erfindungsgemäße Zelle durch mindestens eines der unmittelbar folgenden Merkmale a. bis e., insbesondere durch eine Kombination der unmittelbar vorstehenden Merkmale a. bis e., aus
a. Die Zelle weist eine metallische Kontaktplatte auf, mit der der erste Längsrand des Anodenstromkollektors, bevorzugt der Länge nach, in unmittelbarem Kontakt steht und mit der dieser Längsrand durch Verschweißung verbunden ist.
b. Die Zelle weist eine metallische Kontaktplatte auf, mit der der erste Längsrand des Kathodenstromkollektors, bevorzugt der Länge nach, in unmittelbarem Kontakt steht und mit der dieser Längsrand durch Verschweißung verbunden ist.
c. Eine der Kontaktplatten ist der Boden des ersten Gehäuseteils.
d. Die andere der Kontaktplatten ist das zweite Gehäuseteil.
e. Die Zelle umfasst eine elektrische Dichtung, welche das erste und das zweite Gehäuseteil elektrisch voneinander isoliert.

In dieser Ausführungsform werden auf keiner Seite des Elektroden-Separator-Verbunds elektrische Leiter zum Verbinden von Kontaktplatten mit Gehäuseteilen benötigt. Auf einer Seite kommt einer Kontaktplatte zusätzlich die Funktion eines Gehäuseteils zu, auf der anderen Seite dient ein Teil eines Gehäuses als Kontaktplatte. Der Raum innerhalb des Gehäuses kann optimal genutzt werden.

In einer weiteren bevorzugten Weiterbildung der ersten Variante zeichnet sich die erfindungsgemäße Zelle durch mindestens eines der unmittelbar folgenden Merkmale a. bis e. aus:
a. Die Zelle weist eine metallische Kontaktplatte auf, mit der der erste Längsrand des Anodenstromkollektors, bevorzugt der Länge nach, in unmittelbarem Kontakt steht und mit der dieser Längsrand durch Verschweißung verbunden ist.
b. Die Zelle weist eine metallische Kontaktplatte auf, mit der der erste Längsrand des Kathodenstromkollektors, bevorzugt der Länge nach, in unmittelbarem Kontakt steht und mit der dieser Längsrand durch Verschweißung verbunden ist.
c. Eine der Kontaktplatten ist der Boden des ersten Gehäuseteils.
d. Das zweite Gehäuseteil ist in die Öffnung des ersten Gehäuseteils eingeschweißt und umfasst eine Poldurchführung, beispielsweise ein von einem elektrischen Isolator umgebener Polbolzen, durch welche ein elektrischer Leiter aus dem Gehäuse herausgeführt ist.
e. Die andere der Kontaktplatten ist mit diesem elektrischen Leiter elektrisch verbunden.

Es ist besonders bevorzugt, dass die unmittelbar vorstehenden Merkmale a. bis e. in Kombination miteinander verwirklicht sind.

In dieser Ausführungsform sind die Gehäuseteile miteinander verschweißt und damit elektrisch miteinander verbunden. Aus diesem Grund wird besagte Poldurchführung benötigt.

In einer zweiten Variante der Erfindung zeichnet sich die erfindungsgemäße Zelle durch mindestens eines der unmittelbar folgenden Merkmale a. und b., besonders bevorzugt durch eine Kombination der beiden Merkmale, aus:
a. Das Gehäuse umfasst ein rohrförmiges erstes Gehäuseteil mit zwei endständigen Öffnungen, ein zweites Gehäuseteil, das eine der Öffnungen verschließt und ein drittes Gehäuseteil, das die andere der Öffnungen verschließt.
b. Die Kontaktplatte ist das zweite Gehäuseteil oder das dritte Gehäuseteil.

Auch in dieser Variante ist das Gehäuse der Zelle bevorzugt zylindrisch oder prismatisch ausgebildet. Das rohrförmige erste Gehäuseteil weist entsprechend bevorzugt einen kreisförmigen oder rechteckigen Querschnitt auf und das zweite und dritte Gehäuseteil sind entsprechend bevorzugt kreisförmig oder rechteckig ausgebildet.

Wenn das Gehäuse zylindrisch ausgebildet ist, dann ist das erste Gehäuseteil in aller Regel hohlzylindrisch ausgebildet während das zweite und dritte Gehäuseteil kreisförmig ausgebildet sind und als Kontaktplatten sowie gleichzeitig als Boden und Deckel, welche das erste Gehäuseteil endständig verschließen können, dienen können.

Wenn das Gehäuse prismatisch ausgebildet ist, dann umfasst das erste Gehäuseteil in aller Regel mehrere rechteckige, über gemeinsame Kanten miteinander verbundene Seitenwände, während das zweite und das dritte Gehäuseteil jeweils polygonal, insbesondere rechteckig, ausgebildet sind. Sowohl das zweite und das dritte Gehäuseteil können als Kontaktplatten dienen.

Sowohl das erste als auch das zweite Gehäuseteil besteht bevorzugt aus einem elektrisch leitenden Werkstoff, insbesondere aus einem metallischen Werkstoff. Die Gehäuseteile können z.B. aus einem vernickelten Stahlblech, aus Edelstahl (beispielsweise vom Typ 1.4303 oder 1.4304), aus Kupfer, aus vernickeltem Kupfer oder aus legiertem oder unlegiertem Aluminium bestehen. Es kann auch bevorzugt sein, dass mit der Kathode elektrisch verbundene Gehäuseteile aus Aluminium oder aus einer Aluminiumlegierung und mit der Anode elektrisch verbundene Gehäuseteile aus Kupfer oder einer Kupferlegierung oder aus vernickeltem Kupfer bestehen.

Ein großer Vorteil dieser Variante ist, dass zur Bildungdes Gehäuses keine durch vorgeschaltete Umform- und/oder Gießvorgänge herzustellende becherförmige Gehäuseteile benötigt werden. Als Ausgangspunkt dient stattdessen besagtes rohrförmiges erstes Gehäuseteil.

In einer bevorzugten Weiterbildung der zweiten Variante zeichnet sich die erfindungsgemäße Zelle durch mindestens eines der unmittelbar folgenden Merkmale a. bis e., insbesondere durch eine Kombination der unmittelbar vorstehenden Merkmale a. bis e., aus:
a. Die Zelle weist eine metallische Kontaktplatte auf, mit der der erste Längsrand des Anodenstromkollektors, bevorzugt der Länge nach, in unmittelbarem Kontakt steht und mit der dieser Längsrand durch Verschweißung verbunden ist.
b. Die Zelle weist eine metallische Kontaktplatte auf, mit der der erste Längsrand des Kathodenstromkollektors, bevorzugt der Länge nach, in unmittelbarem Kontakt steht und mit der dieser Längsrand durch Verschweißung verbunden ist.
c. Eine der Kontaktplatten ist in eine der endständigen Öffnungen des ersten Gehäuseteils eingeschweißt und ist das zweite Gehäuseteil.
d. Das dritte Gehäuseteil ist in die andere der endständigen Öffnungen des ersten Gehäuseteils eingeschweißt und umfasst eine Poldurchführung, durch welche ein elektrischer Leiter aus dem Gehäuse herausgeführt ist, beispielsweise einen von einem elektrischen Isolator umgebenen Polbolzen.
e. Die andere der Kontaktplatten ist mit diesem elektrischen Leiter elektrisch verbunden.

Es ist besonders bevorzugt, dass die unmittelbar vorstehenden Merkmale a. bis e. in Kombination miteinander verwirklicht sind.

In einer weiteren bevorzugten Weiterbildung der zweiten Variante zeichnet sich die erfindungsgemäße Zelle durch mindestens eines der unmittelbar folgenden Merkmale a. bis d. aus:
a. Die Zelle weist eine metallische Kontaktplatte auf, mit der der erste Längsrand des Anodenstromkollektors, bevorzugt der Länge nach, in unmittelbarem Kontakt steht und mit der dieser Längsrand durch Verschweißung verbunden ist.
b. Die Zelle weist eine metallische Kontaktplatte auf, mit der der erste Längsrand des Kathodenstromkollektors, bevorzugt der Länge nach, in unmittelbarem Kontakt steht und mit der dieser Längsrand durch Verschweißung verbunden ist.
c. Eine der Kontaktplatten ist in eine der endständigen Öffnungen des ersten Gehäuseteils eingeschweißt und ist das zweite Gehäuseteil.
d. Die andere der Kontaktplatten verschließt als drittes Gehäuseteil die andere der endständigen Öffnungen des ersten Gehäuseteils und ist mittels einer Dichtung von dem ersten Gehäuseteil isoliert.

Es ist besonders bevorzugt, dass die unmittelbar vorstehenden Merkmale a. bis d. in Kombination miteinander verwirklicht sind.

Beide Ausführungsformen zeichnen sich dadurch aus, dass auf einer Gehäuseseite eine Kontaktplatte als Gehäuseteil dient und mit dem ersten Gehäuseteil durch Verschweißung verbunden ist. Auf der anderen Seite kann ebenfalls eine Kontaktplatte als Gehäuseteil dienen. Diese muss dann aber elektrisch von dem ersten Gehäuseteil isoliert sein. Alternativ kann auch hier wieder mit einer Poldurchführung gearbeitet werden.

Die Poldurchführungen erfindungsgemäßer Zellen umfassen stets einen elektrischen Isolator, der einen elektrischen Kontakt des Gehäuses mit dem aus dem Gehäuse geführten elektrischen Leiter unterbindet. Bei dem elektrischen Isolator kann es sich beispielsweise um ein Glas oder einen keramischen Werkstoff oder um einen Kunststoff handeln.

Der Elektroden-Separator-Verbund liegt bevorzugt in Form eines zylindrischen Wickels vor. Die Bereitstellung der Elektroden in Form eines solchen Wickels erlaubt eine besonders vorteilhafte Raumnutzung in zylindrischen Gehäusen. Das Gehäuse ist daher in bevorzugten Ausführungsformen ebenfalls zylindrisch.

In anderen bevorzugten Ausführungsformen liegt der Elektroden-Separator-Verbund bevorzugt in Form eines prismatischen Wickels vor. Die Bereitstellung der Elektroden in Form eines solchen Wickels erlaubt eine besonders vorteilhafte Raumnutzung in prismatischen Gehäusen. Das Gehäuse ist daher in bevorzugten Ausführungsformen ebenfalls prismatisch.

Daneben können prismatische Gehäuse besonders gut von prismatischen Stapeln aus den oben eingeführten identischen Elektroden-Separator-Verbünden ausgefüllt werden. Die Elektroden-Separator-Verbünden können zu diesem Zweck besonders bevorzugt eine im Wesentlichen rechteckige Grundform aufweisen.

In besonders bevorzugten Ausgestaltungen ist die erfindungsgemäße Zelle durch mindestens eines der unmittelbar folgenden Merkmale a. bis c. gekennzeichnet:
a. der bandförmige Hauptbereich des mit der Kontaktplatte durch Verschweißung verbundenen Stromkollektors weist eine Vielzahl von Durchbrechungen auf.
b. Bei den Durchbrechungen in dem Hauptbereich handelt es sich um runde oder eckige Löcher, insbesondere Stanz- oder Bohrlöcher.
c. Der mit der Kontaktplatte durch Verschweißung verbundene Stromkollektor ist in dem Hauptbereich perforiert, insbesondere durch Rundloch-oder Schlitzlochperforation.

Die Vielzahl von Durchbrechungen resultiert in einem verringerten Volumen und auch verringertem Gewicht des Stromkollektors. Dies macht es möglich, mehr Aktivmaterial in die Zelle einzubringen und auf diese Weise die Energiedichte der Zelle drastisch zu steigern. Energiedichtenerhöhungen bis in den zweistelligen Prozentbereich können so erreicht werden.

In einigen bevorzugten Ausführungsformen sind die Durchbrechungen mittels Laser in den bandförmigen Hauptbereich eingebracht.

Grundsätzlich ist die Geometrie der Durchbrechungen nicht erfindungswesentlich. Wichtig ist, dass in Folge der Einbringung der Durchbrechungen die Masse des Stromkollektors verringert und mehr Platz für Aktivmaterial da ist, da die Durchbrechungen mit dem Aktivmaterial befüllt werden können.

Sehr vorteilhaft kann hingegen sein, bei der Einbringung der Durchbrechungen darauf zu achten, dass der maximale Durchmesser der Durchbrechungen nicht zu groß ist. Bevorzugt sollten die Durchbrechungen nicht mehr als das doppelte der Dicke der Schicht des Elektrodenmaterials auf dem jeweiligen Stromkollektor betragen.

In besonders bevorzugten Ausgestaltungen ist die erfindungsgemäße Zelle durch das unmittelbar folgende Merkmal a. gekennzeichnet:
a. Die Durchbrechungen in dem Stromkollektor, insbesondere in dem Hauptbereich, weisen Durchmesser im Bereich von 1 µm bis 3000 µm auf.

Innerhalb dieses bevorzugten Bereiches sind Durchmesser im Bereich von 10 µm bis 2000 µm, bevorzugt von 10 µm bis 1000 µm, insbesondere von 50 µm bis 250 µm, weiter bevorzugt.

Besonders bevorzugt zeichnet sich die erfindungsgemäße Zelle weiterhin durch mindestens eines der unmittelbar folgenden Merkmale a. und b. aus:
a. Der mit der Kontaktplatte durch Verschweißung verbundene Stromkollektor weist zumindest in einem Teilabschnitt des Hauptbereichs ein geringeres Flächengewicht auf als der freie Randstreifen desselben Stromkollektors.
b. Der mit der Kontaktplatte durch Verschweißung verbundene Stromkollektor weist in dem freien Randstreifen keine oder weniger Durchbrechungen pro Flächeneinheit als in dem Hauptbereich auf.

Es ist besonders bevorzugt, dass die unmittelbar vorstehenden Merkmale a. und b. in Kombination miteinander verwirklicht sind.

Der freien Randstreifen von Anoden- und Kathodenstromkollektor begrenzen den Hauptbereich zu den ersten Längsrändern hin. Bevorzugt umfassen der Anoden- und der Kathodenstromkollektor freie Randstreifen jeweils entlang ihren beiden Längsrändern.

Die Durchbrechungen charakterisieren den Hauptbereich. Mit anderen Worten, die Grenze zwischen dem Hauptbereich und dem oder den freien Randstreifen entspricht einem Übergang zwischen Bereichen mit und ohne Durchbrechungen.

Die Durchbrechungen sind bevorzugt im Wesentlichen gleichmäßig über den Hauptbereich verteilt.

In weiteren besonders bevorzugten Ausführungsformen zeichnet sich die erfindungsgemäße Zelle durch mindestens eines der unmittelbar folgenden Merkmale a. bis c. aus:
a. Das Flächengewicht des Stromkollektors ist in dem Hauptbereich gegenüber dem Flächengewicht des Stromkollektors in dem freien Randstreifen um 5 % bis 80 % reduziert.
b. Der Stromkollektor weist in dem Hauptbereich eine Lochfläche im Bereich von 5 % bis 80 % auf.
c. Der Stromkollektorweist in dem Hauptbereich eine Zugfestigkeit von 20 N/mm² bis 250 N/mm² auf.

Die Bestimmung der Lochfläche, die häufig auch als freier Querschnitt bezeichnet wird, kann gemäß ISO 7806-1983 erfolgen. Die Zugfestigkeit des Stromkollektors in dem Hauptbereich ist gegenüber Stromkollektoren ohne die Durchbrechungen verringert. Ihre Bestimmung kann gemäß DIN EN ISO 527 Teil 3 erfolgen.

Es ist bevorzugt, dass der Anodenstromkollektor und der Kathodenstromkollektor bezüglich der Durchbrechungen gleich oderähnlich ausgebildet sind. Diejeweils erzielbaren Energiedichteverbesserungen addieren sich. Die erfindungsgemäße Zelle zeichnet sich daher in bevorzugten Ausführungsformen weiterhin durch mindestens eines der unmittelbar folgenden Merkmale a. bis c. aus:
a. Der bandförmige Hauptbereich des Anodenstromkollektors und der bandförmige Hauptbereich des Kathodenstromkollektors sind beide durch eine Vielzahl der Durchbrechungen gekennzeichnet.
b. Die Zelle umfasst die Kontaktplatte, die auf dem einem der ersten Längsränder aufliegt, als erste Kontaktplatte, sowie weiterhin eine zweite metallische Kontaktplatte, die auf dem anderen der ersten Längsränder aufliegt.
c. Die zweite Kontaktplatte ist mit diesem anderen Längsrand durch Verschweißung verbunden.

Es ist besonders bevorzugt, dass die unmittelbar vorstehenden Merkmale a. bis c. in Kombination miteinander verwirklicht sind. Die Merkmale b. und c. können in Kombination aber auch ohne Merkmal a. realisiert sein.

Die vorstehend beschriebenen bevorzugten Ausgestaltungen des mit den Durchbrechungen versehenen Stromkollektors sind unabhängig voneinander auf den Anodenstromkollektor und den Kathodenstromkollektor anwendbar.

Die Verwendung perforierter oder auf sonstige Weise mit einer Vielzahl von Durchbrechungen versehener Stromkollektoren ist bei Lithium-ionen-Zellen bislang nicht ernsthaft in Erwägung gezogen worden, da sich solche Stromkollektoren nur sehr schlecht elektrisch kontaktieren lassen. Wie eingangs erwähnt, erfolgt die elektrische Anbindung der Stromkollektoren vielfach über separate elektrische Ableiterfahnen. Eine zuverlässige Verschweißung dieser Ableiterfahnen an perforierte Stromkollektoren in industriellen Massenproduktionsprozessen ist ohne eine akzeptable Fehlerrate jedoch nur schwer realisierbar.

Erfindungsgemäß wird dieses Problem durch die beschriebene Verschweißung der Stromkollektorränder mit der oder den Kontaktplatten gelöst. Das erfindungsgemäße Konzept ermöglicht den vollständigen Verzicht auf separate Ableiterfahnen und ermöglicht so die Verwendung materialarmer, mit Durchbrechungen versehener Stromkollektoren. Insbesondere in Ausführungsformen, bei denen die freien Randstreifen der Stromkollektoren nicht mit Durchbrechungen versehen sind, kann eine Verschweißung zuverlässig mit ausgesprochen geringen Ausschussraten erfolgen.

Werden als Stromkollektoren sehr dünne Metallfolien verwendet, so können die Längsränder der Stromkollektoren mechanisch außerordentlich empfindlich sein und während derVerschweißung mit Kontaktplatten unbeabsichtigt niedergedrückt oder niedergeschmolzen werden. Weiterhin kann es beim Anschweißen der Kontaktplatten zu einem Schmelzen von Separatoren des Elektroden-Separator-Verbunds kommen. Die oben beschriebene Stützschicht wirkt dem entgegen.

Das Konzept der Verschweißung der Ränder von Stromkollektoren mit Kontaktplatten ist bereits aus der WO 2017/215900 A1 oder aus der JP 2004-119330 A bekannt. Die Verwendung von Kontaktplatten ermöglicht besonders hohe Strombelastbarkeiten und einen geringen Innenwiderstand. Bezüglich Verfahren zur elektrischen Verbindung von Kontaktplatten mit den Rändern von Stromkollektoren wird daher auf den Inhalt der WO 2017/215900 A1 und der JP 2004-119330 A vollumfänglich Bezug genommen.

In einigen bevorzugten Ausführungsformen weist die erfindungsgemäße Zelle mindestens eines der unmittelbar folgenden Merkmale a. und b. auf:
a. Als Kontaktplatten werden Metallplatten mit einer Dicke im Bereich von 50 µm bis 600 µm, bevorzugt 150 - 350 µm, eingesetzt.
b. Die Kontaktplatten bestehen aus legiertem oder unlegiertem Aluminium, Titan, Nickel oder Kupfer, aber gegebenenfalls auch aus Edelstahl (beispielsweise vom Typ 1.4303 oder 1.4304) oder aus vernickeltem Stahl.

Die angegebenen Dicken sind sowohl in den beschriebenen Fällen, in denen eine Kontaktplatte Teil des Gehäuses ist, als auch in Fällen, in denen eine Kontaktplatte nicht als Teil des Gehäuses dient, bevorzugt.

Insbesondere in Ausführungsformen, in denen eine Kontaktplatte nicht als Teil des Gehäuses dient, kann sie mindestens einen Schlitz und/oder mindestens eine Perforierung aufweisen. Diese dienen dazu, einer Verformung der Platten bei der Herstellung der Schweißverbindung entgegenzuwirken.

Insbesondere in Ausführungsformen, in denen eine Kontaktplatte als Teil des Gehäuses dient, wird bevorzugt auf Schlitze und Perforierungen verzichtet. Allerdings kann eine solche Kontaktplatte eine Durchbrechung, insbesondere ein Loch in einem zentralen Bereich, aufweisen.

In Fällen, in denen das Gehäuse zylindrisch ausgebildet ist, werden bevorzugt Kontaktplatten eingesetzt, die die Form einer Scheibe, insbesondere die Form einer kreisförmigen oder zumindest näherungsweise kreisförmigen Scheibe, aufweisen. Sie weisen dann also einen äußeren kreisförmigen oder zumindest näherungsweise kreisförmigen Scheibenrand auf. Unter einer näherungsweise kreisförmigen Scheibe soll hierbei insbesondere eine Scheibe verstanden werden, die die Form eines Kreises mit mindestens einem abgetrennten Kreissegment, bevorzugt mit zwei bis vier abgetrennten Kreissegmenten, aufweist.

In Fällen, in denen das Gehäuse zylindrisch ausgebildet ist, werden bevorzugt Kontaktplatten eingesetzt, die eine rechteckige Grundform aufweisen.

In besonders bevorzugten Ausführungsformen bestehen der Anodenstromkollektor und die daran geschweißte Kontaktplatte beide aus dem gleichen Material. Dieses wird besonders bevorzugt aus der Gruppe mit Kupfer, Nickel, Titan, vernickeltem Stahl und Edelstahl gewählt.

In weiteren besonders bevorzugten Ausführungsformen bestehen der Kathodenstromkollektor und die daran geschweißte Kontaktplatte beide aus dem gleichen Material. Dieses wird besonders bevorzugt aus der Gruppe mit legiertem oder unlegiertem Aluminium, Titan und Edelstahl (z.B. vom Typ 1.4404) gewählt.

Wie oben erwähnt, weist die erfindungsgemäße Zelle eine metallische Kontaktplatte auf, mit der einer der ersten Längsränder, bevorzugt der Länge nach, in unmittelbarem Kontakt steht. Dadurch bedingt ergibt sich eine linienartige Kontaktzone.

In möglichen bevorzugten Weiterbildungen zeichnet sich die erfindungsgemäße Zelle durch mindestens eines der unmittelbar folgenden Merkmale a. bis c. aus:
a. Der erste Längsrand des Anodenstromkollektors steht mit einer metallischen Kontaktplatte, bevorzugt der Länge nach, in unmittelbarem Kontakt und ist mit dieser Kontaktplatte durch Verschweißung verbunden, wobei zwischen dem Längsrand und der metallischen Kontaktplatte eine linienartige Kontaktzone besteht.
b. Der erste Längsrand des Kathodenstromkollektors steht mit einer metallischen Kontaktplatte, bevorzugt der Länge nach, in unmittelbarem Kontakt und ist mit dieser Kontaktplatte durch Verschweißung verbunden, wobei zwischen dem Längsrand und der metallischen Kontaktplatte eine linienartige Kontaktzone besteht.
c. Der erste Längsrand des Anodenstromkollektors und/oder des Kathodenstromkollektors umfasst einen oder mehrere Abschnitte, die jeweils über ihre gesamte Länge über eine Schweißnaht durchgehend mit der jeweiligen Kontaktplatte verbunden sind.

Die unmittelbar vorstehenden Merkmale a. und b. können sowohl unabhängig voneinander als auch in Kombination realisiert sein. Bevorzugt sind die Merkmale a. und b. allerdings in beiden Fällen in Kombination mit dem unmittelbar vorstehenden Merkmal c. realisiert.

Es gibt mehrere Möglichkeiten, wie die Kontaktplatten mit den Längsrändern verbunden werden können.

Die Kontaktplatten können mit den Längsrändern entlang der linienartigen Kontaktzonen über mindestens eine Schweißnaht verbunden sein. Die Längsränder können also einen oder mehrere Abschnitte umfassen, die jeweils über ihre gesamte Länge über eine Schweißnaht durchgehend mit der oder den Kontaktplatten verbunden sind. Besonders bevorzugt weisen diese Abschnitte eine Mindestlänge von 5 mm, bevorzugt von 10 mm, besonders bevorzugt von 20 mm, auf.

In einer möglichen Weiterbildung erstrecken sich der oder die mit der Kontaktplatte über ihre gesamte Länge durchgehend verbundenen Abschnitte über mindestens 25 %, bevorzugt über mindestens 50 %, besonders bevorzugt über mindestens 75 %, der Gesamtlänge des jeweiligen Längsrandes.

In einigen bevorzugten Ausführungsformen sind die Längsränder über ihre gesamte Länge durchgehend mit der Kontaktplatte verschweißt.

In weiteren möglichen Ausführungsformen sind die Kontaktplatten mit dem jeweiligen Längsrand über eine Mehrzahl oder Vielzahl von Schweißpunkten verbunden.

Wenn der Elektroden-Separator-Verbund in Form eines spiralförmigen Wickels vorliegt, weisen die aus den endständigen Stirnseiten des Wickels austretenden Längsränder des Anodenstromkollektors und des Kathodenstromkollektors in der Regel ebenfalls eine spiralförmige Geometrie auf. Analoges gilt für die linienartige Kontaktzone, entlang der die Kontaktplatten mit dem jeweiligen Längsrand verschweißt sind.

Wenn der Elektroden-Separator-Verbund Bestandteil des Stapels aus den zwei oder mehr identischen Elektroden-Separator-Verbünden ist, so weisen die aus den endständigen Seiten des Wickels austretenden Längsränder des Anodenstromkollektors und des Kathodenstromkollektors in der Regel eine lineare Geometrie auf. Analoges gilt für die linienartige Kontaktzone, entlang der die Kontaktplatten mit dem jeweiligen Längsrand verschweißt sind.

In weiteren möglichen bevorzugten Weiterbildungen zeichnet sich die erfindungsgemäße Zelle durch mindestens eines der unmittelbar folgenden Merkmale a. bis c. aus:
a. Der Separator ist ein bandförmiges Kunststoffsubstrat mit einer Dicke im Bereich von 5 µm bis 50 µm, bevorzugt im Bereich von 7 µm bis 12 µm, sowie mit einem ersten und einem zweiten Längsrand und zwei Endstücken.
b. Die Längsränder des Separators bilden die endständigen Seiten oder Stirnseiten des Elektroden-Separator-Verbunds.
c. Die aus den endständigen Seiten oder Stirnseiten des Wickels austretenden Längsränder des Anodenstromkollektors und/oder des Kathodenstromkollektors ragen nicht mehr als 5000 µm, bevorzugt nicht mehr als 3500 µm, aus den Seiten oder Stirnseiten heraus.

Es ist besonders bevorzugt, dass die unmittelbar vorstehenden Merkmale a. bis c. in Kombination miteinander verwirklicht sind.

Besonders bevorzugt ragt der Längsrand des Anodenstromkollektors aus der Seite oder Stirnseite des Wickels nicht mehr als 2500 µm, besonders bevorzugt nicht mehr als 1500 µm, heraus.

Besonders bevorzugt ragt der Längsrand des Kathodenstromkollektors aus der Seite oder Stirnseite des Wickels nicht mehr als 3500 µm, besonders bevorzugt nicht mehr als 2500 µm, heraus.

Die Zahlenangaben zum Überstand des Anodenstromkollektors und/oder des Kathodenstromkollektors beziehen sich auf den freien Überstand bevor die Seiten oder Stirnseiten mit der Kontaktplatte in Kontakt gebracht werden. Beim Anschweißen der Kontaktplatte kann es zu Deformationen der Ränder der Stromkollektoren kommen.

Je geringer der freie Überstand gewählt wird, desto breiter können die mit Elektrodenmaterial bedeckten bandförmigen Hauptbereiche der Stromkollektoren ausgebildet werden. Dies kann positiv zur Energiedichte der erfindungsgemäßen Zelle beitragen.

Bei der erfindungsgemäßen Lithium-Ionen-Zelle kann es sich um eine Knopfzelle handeln. Knopfzellen sind zylindrisch ausgebildet und weisen eine Höhe auf, die geringer als ihr Durchmesser ist. Bevorzugt liegt die Höhe im Bereich von 4 mm bis 15 mm. Weiter ist es bevorzugt, dass die Knopfzelle einen Durchmesser im Bereich von 5 mm bis 25 mm aufweist. Knopfzellen eignen sich beispielsweise zur Versorgung von kleinen elektronischen Geräten wie Uhren, Hörgeräten und kabellosen Kopfhörern mit elektrischer Energie.

Die Nennkapazität einer als Knopfzelle ausgebildeten erfindungsgemäßen Lithium-Ionen-Zelle beträgt in der Regel bis zu 1500 mAh. Bevorzugt liegt die Nennkapazität im Bereich von 100 mAh bis 1000 mAh, besonders bevorzugt im Bereich von 100 bis 800 mAh.

Besonders bevorzugt ist die erfindungsgemäße Lithium-Ionen-Zelle eine zylindrische Rundzelle. Zylindrische Rundzellen weisen eine Höhe auf, die größer als ihr Durchmesser ist. Sie eignen sich insbesondere für Anwendungen im Automobilbereich, für E-Bikes oder auch für andere Anwendungen mit hohem Energiebedarf.

Bevorzugt liegt die Höhe als Rundzelle ausgebildeter Lithium-Ionen-Zellen im Bereich von 15 mm bis 150 mm. Der Durchmesser der zylindrischen Rundzellen liegt bevorzugt im Bereich von 10 mm bis 60 mm. Innerhalb dieser Bereiche sind Formfaktoren von beispielsweise 18 x 65 (Durchmesser mal Höhe in mm) oder 21 x 70 (Durchmesser mal Höhe in mm) besonders bevorzugt. Zylindrische Rundzellen mit diesen Formfaktoren eignen sich insbesondere zur Stromversorgung elektrischer Antriebe von Kraftfahrzeugen.

Die Nennkapazität deralszylindrische Rundzelle ausgebildeten erfindungsgemäßen Lithium-Ionen-Zelle beträgt bevorzugt bis zu 90000 mAh. Mit dem Formfaktor von 21 x 70 hat die Zelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Der Anodenstromkollektor, der Kathodenstromkollektor und der Separator weisen in Ausführungsformen, bei denen die erfindungsgemäße Zelle eine zylindrische Rundzelle ist, bevorzugt die folgenden Dimensionen auf:
- Eine Länge im Bereich von 0,5 m bis 25 m
- Eine Breite im Bereich 30 mm bis 145 mm

Der freie Randstreifen, der sich entlang des ersten Längsrands erstreckt und der nicht mit dem Elektrodenmaterial beladen ist, weist in diesen Fällen bevorzugt eine Breite von nicht mehr als 5000 µm auf.

Im Falle einer zylindrischen Rundzelle mit dem Formfaktor 18 x 65 weisen die Stromkollektoren bevorzugt
- eine Breite von 56 mm bis 62 mm, bevorzugt von 60 mm, und
- eine Länge von nicht mehr als 1,5 m
auf.

Im Falle einer zylindrischen Rundzelle mit dem Formfaktor 21 x 70 weisen die Stromkollektoren bevorzugt
- eine Breite von 56 mm bis 68 mm, bevorzugt von 65 mm, und
- eine Länge von nicht mehr als 2,5 m
auf.

Das oben beschriebene Design der erfindungsgemäßen Zelle ermöglicht noch einen weiteren, signifikanten Vorteil. Bei Elektroden, bei denen die elektrische Anbindung der Stromkollektoren über die eingangs erwähnten separaten Ableiterfahnen erfolgt, tritt beim Laden und Entladen unmittelbar in der Nähe der Ableiterfahnen eine größere thermo-mechanische Belastung auf als entfernt von den Ableiterfahnen. Dieser Unterschied tritt besonders ausgeprägt bei negativen Elektroden zu Tage, die als Aktivmaterial einen Anteil an Silizium, Zinn und/oder Antimon aufweisen, da Partikel aus diesen Materialien beim Laden und Entladen vergleichsweise starken Volumenänderungen unterliegen. So erwiesen sich beispielsweise Anteile von mehr als 10 % Silizium in negativen Elektroden daher bislang nur als schwer beherrschbar.

Die elektrische Anbindung des oder der Stromkollektoren über Kontaktplatten ermöglicht nicht nur die erwähnte gleichmäßige Entwärmung von Zellen, vielmehr werden dadurch auch die beim Laden und Entladen auftretenden thermo-mechanischen Belastungen gleichmäßig auf den Wickel verteilt. Überraschenderweise ermöglicht dies die Beherrschung sehr hoher Anteile an Silizium und/oder Zinn und/oder Antimon in der negativen Elektrode, bei Anteilen > 20 % wurden beim Laden und Entladen vergleichsweise selten oder keine Schäden in Folge der thermomechanischen Belastungen beobachtet. Durch Erhöhung des Anteils an beispielsweise Silizium in der Anode lässt sich auch die Energiedichte der Zelle weiter erhöhen.

Entsprechend zeichnet sich die erfindungsgemäße Zelle in besonders bevorzugten Ausführungsformen durch das unmittelbar folgende Merkmal a. aus:
a. Das negative Elektrodenmaterial umfasstals negatives Aktivmaterial Silizium, Aluminium, Zinn und/oder Antimon, insbesondere partikuläres Silizium, Aluminium, Zinn und/oder Antimon, in einem Anteil von 20 Gew.-% bis 90 Gew.-%, bevorzugt von 50 Gew.-% bis 90 Gew.-%.

Die Gewichtsangaben beziehen sich hierbei auf die Trockenmasse des negativen Elektrodenmaterials, also ohne Elektrolyt und ohne Berücksichtigung des Gewichts des Anodenstromkollektors.

Zu betonen ist, dass auch diese Ausführungsform völlig unabhängig von Merkmal j. aus Anspruch 1 realisierbar ist. Die Erfindung umfasst somit auch Zellen mit den Merkmalen a. bis i. des Anspruchs 1, bei denen die Anode im geladenen Zustand partikuläres Silizium in einem Anteil von 20 Gew.-% bis 90 Gew.-% umfasst, bei denen aber nicht zwingend ein Teil des Gehäuses als die Kontaktplatte dient und/oder die Kontaktplatte einen Teil des Gehäuses bildet, das den Elektroden-Separator-Verbund umschließt.

Aus den Aktivmaterialien Silizium, Aluminium, Zinn und Antimon ist Silizium besonders bevorzugt.

Der Fachmann versteht, dass es sich bei dem Zinn, dem Aluminium, dem Silizium und dem Antimon nicht zwingend um Metalle in ihrer Reinstform handeln muss. So können beispielsweise Silizium-Partikel auch Spuren anderer Elemente, insbesondere anderer Metalle (abgesehen von Lithium), aufweisen, beispielsweise in Anteilen von bis zu 10 Gew.-%.

Das erfindungsgemäße Verfahren dient zur Herstellung der oben beschriebenen Zelle. Es umfasst stets die unmittelbar folgenden Schritte oder Merkmale a. bis d.:
a. Bereitstellung des oben beschriebenen Elektroden-Separator-Verbundes mit den endständigen Seiten oder Stirnseiten, aus denen der erste Längs rand des Anodenstromkollektors und der der erste Längsrand des Kathodenstromkollektors austreten,
b. Bereitstellen einer der oben beschriebenen metallischen Kontaktplatten zur elektrischen Kontaktierung eines der ersten Längsränder,
c. Verschweißen dieses Längsrandes mit der Kontaktplatte,
   wobei
d. als Kontaktplatte ein Teil eines Gehäuseteils dient, das den Elektroden-Separator-Verbund umschließt, oderdie Kontaktplatte mit mindestens einem weiteren Gehäuseteil zu einem Gehäuse verbunden wird, das den Elektroden-Separator-Verbund umschließt.

Die Kontaktplatte wird also gegebenenfalls als Teil eines Gehäuseteils bereitgestellt.

Beide von dem unmittelbar vorstehenden Merkmal d. umfassten Alternativen haben Vorteile, worauf im Folgenden noch eingegangen wird.

In einer ersten, besonders bevorzugten Weiterbildung des Verfahrens umfasst das Verfahren mindestens einen weiteren der unmittelbar folgenden zusätzlichen Schritte und/oder eines der unmittelbar folgenden Merkmale a. bis d.:
a. Es wird ein becherförmiges erstes Gehäuseteil mit einem Boden und einer umlaufenden Seitenwand und einer Öffnung bereitgestellt.
b. Der Elektroden-Separator-Verbund wird in das becherförmige Gehäuse eingeschoben bis der erste Längsrand des Anodenstromkollektors oder der der erste Längsrand des Kathodenstromkollektors in unmittelbarem Kontakt mit dem Boden stehen.
c. Verschweißen dieses Längsrandes mit dem Boden des ersten Gehäuseteils.
d. Verschließen der Öffnung des ersten Gehäuseteils mit einem zweiten, bevorzugt kreisrunden Gehäuseteil.

Bevorzugt umfasst das Verfahren eine Kombination der vier unmittelbar vorstehenden Schritte und/oder Merkmale a. bis d.

Bei dieser Weiterbildung dient also der Boden des ersten Gehäuseteils als Kontaktplatte.

Betreffend mögliche bevorzugte Ausgestaltungen des ersten becherförmigen und des zweiten Gehäuseteils wird auf die obenstehenden Erläuterungen zur erfindungsgemäßen Zelle Bezug genommen.

Die Verschweißung des Längsrandes mit dem Boden des ersten Gehäuseteils kann insbesondere mittels eines Lasers von außerhalb des Gehäuses erfolgen.

Es ist bei dieser ersten Weiterbildung bevorzugt, dass der nicht mit dem Boden in Kontakt stehende erste Längsrand von Anoden- oder Kathodenstromkollektor bereits mit einer weiteren Kontaktplatte verschweißt ist, wenn der Elektroden-Separator-Verbund in das becherförmige erste Gehäuse eingeschoben wird. Diese weitere Kontaktplatte kann über einen elektrischen Leiter mit dem zweiten Gehäuseteil verbunden werden, das zum Verschließen der Öffnung des becherförmigen ersten Gehäuseteils dient.

In diesen Fällen, in denen die weitere Kontaktplatte über den elektrischen Leiter mit dem zweiten Gehäuseteil verbunden wird, wird das zweite Gehäuseteil bevorzugt in die Öffnung des ersten Gehäuseteils eingeschweißt, beispielsweise mittels eines Lasers. Das zweite Gehäuseteil weist in diesen Fällen bevorzugt die oben beschriebene Poldurchführung auf. Alternativ ist es aber auch möglich, auf den Rand des zweiten Gehäuseteils eine elektrisch isolierende Dichtung aufzuziehen, das zweite Gehäuseteil mitsamt der Dichtung zum Verschließen in die Öffnung des ersten Gehäuseteils einzusetzen und dort zu fixieren.

In einer anderen Ausführungsform der ersten Weiterbildung dient die weitere Kontaktplatte als Gehäuseteil, das mit dem becherförmigen ersten Gehäuseteil zu dem Gehäuse verbunden wird, das den Elektroden-Separator-Verbund umschließt, präziser als das zweite Gehäuseteil des unmittelbar vorstehenden Merkmals d..

In diesem Fall wird die weitere, bereits mit dem Längsrand des Anoden- oder des Kathodenstromkollektors verschweißte Kontaktplatte nach dem Einschieben zum Verschließen des Gehäuses in der Öffnung des ersten Gehäuseteils bevorzugt mechanisch fixiert, beispielsweise mittels eines Bördelvorgangs, Zuvor ist auf den Rand der Kontaktplatte eine elektrisch isolierende Dichtung aufzuziehen. Dies geschieht idealerweise bereits vor dem Einschieben des Elektroden-Separator-Verbundes in das erste Gehäuseteil.

Diese Ausführungsform besitzt den Charme, dass das Totvolumen innerhalb des Gehäuses durch die Bifunktionalität der Kontaktplatten, die beide zugleich Gehäuseteile sind, minimiert ist.

In einer zweiten, besonders bevorzugten Weiterbildung des Verfahrend umfasst das Verfahren mindestens einen der unmittelbar folgenden zusätzlichen Schritte und/oder eines der unmittelbar folgenden Merkmale:
a. Der Elektroden-Separator-Verbund wird bereitgestellt.
b. Eine metallische Kontaktplatte wird mit dem ersten Längsrand des Anodenstromkollektors unmittelbar in Kontakt gebracht und mit diesem Längsrand verschweißt
c. Eine metallische Kontaktplatte wird mit dem ersten Längsrand des Kathodenstromkollektors unmittelbar in Kontakt gebracht und mit diesem Längsrand verschweißt
d. Es wird ein rohrförmiges erstes Gehäuseteil mit zwei stirnseitigen Öffnungen bereitgestellt.
e. Der Elektroden-Separator-Verbund wird durch eine der stirnseitigen Öffnungen in das rohrförmige erste Gehäuseteil eingeschoben.
f. Eine der Kontaktplatten wird als zweites Gehäuseteil in eine der stirnseitigen Öffnungen des ersten Gehäuseteils eingeschweißt.
g. Ein drittes Gehäuseteil, das eine Poldurchführung umfasst, durch welche ein elektrischer Leiter aus dem Gehäuse herausgeführtwerden kann, beispielsweise einen von einem elektrischen Isolator umgebenen Polbolzen, wird in die andere der stirnseitigen Öffnungen des ersten Gehäuseteils eingeschweißt.

Bevorzugt umfasst das Verfahren eine Kombination der sieben unmittelbar vorstehenden Schritte und/oder Merkmale a. bis g.

Betreffend mögliche bevorzugte Ausgestaltungen des ersten becherförmigen und des zweiten Gehäuseteils wird auch hierauf die obenstehenden Erläuterungen zur erfindungsgemäßen Zelle Bezug genommen.

Diese Ausführungsform besitzt den Charme, dass das rohrförmige erste Gehäuseteil einfacher und billiger zu produzieren ist als ein becherförmiges Gehäuseteil.

Die Verschweißung des ersten mit dem zweiten Gehäuseteil erfolgt bevorzugt mittels eines Lasers.

Es ist bevorzugt, dass sich das erfindungsgemäße Verfahren durch mindestens einen der unmittelbarfolgenden zusätzlichen Schritte und/oder Merkmale a. oder b. auszeichnet:
a. Durch ein Loch in einem der Gehäuseteile wird das Gehäuse mit einem Elektrolyten befüllt.
b. Das Loch wird nach dem Befüllen durch Verschweißen, Verkleben, Vernieten oder Verlöten verschlossen.

Das Loch kann sich beispielsweise im Boden des ersten becherförmigen Gehäuseteils befinden oder es bildet eine Durchbrechung in einem der weiteren Gehäuseteile, gegebenenfalls in einer der Kontaktplatten.

In einer besonders bevorzugten Ausführungsform wird das Loch mittels eines Überdruckventils, beispielsweise in Form eines Berstkreuzes, verschlossen.

Weitere Merkmale der Erfindung sowie aus der Erfindung resultierende Vorteile ergeben sich aus den Zeichnungen sowie aus der nachfolgenden Beschreibung der Zeichnungen. Die nachfolgend beschriebenen Ausführungsformen dienen lediglich zur Erläuterung und zum besseren Verständnis der Erfindung und sind in keiner Weise einschränkend zu verstehen.

In den Zeichnungen zeigen schematisch
Fig. 1 eine Draufsicht eines Stromkollektors in einer erfindungsgemäßen Ausgestaltung,
Fig. 2 eine geschnittene Ansicht des in Fig. 1 dargestellten Stromkollektors,
Fig. 3 eine Draufsicht einer Anode, die zu einem Elektroden-Separator-Verbund in Form eines Wickels verarbeitet werden kann,
Fig. 4 eine geschnittene Ansicht der in Fig. 3 dargestellten Anode,
Fig. 5 eine Draufsicht auf einen unter Verwendung der in Fig. 3 dargestellten Anode gefertigten Elektroden-Separator-Verbund,
Fig. 6 eine geschnittene Ansicht des in Fig. 5 dargestellten Elektroden-Separator-Verbunds,
Fig. 7 eine geschnittene Ansicht einer Ausführungsform einer erfindungsgemäßen Zelle in Form einer zylindrischen Rundzelle,
Fig. 8 eine geschnittene Ansicht einer weiteren Ausführungsform einer erfindungsgemäßen Zelle in Form einer zylindrischen Rundzelle,
Fig. 9 eine geschnittene Ansicht einer weiteren Ausführungsform einer erfindungsgemäßen Zelle in Form einer zylindrischen Rundzelle,
Fig. 10 eine geschnittene Ansicht einer weiteren Ausführungsform einer erfindungsgemäßen Zelle in Form einer zylindrischen Rundzelle,
Fig. 11 eine geschnittene Ansicht einer weiteren Ausführungsform einer erfindungsgemäßen Zelle in Form einer zylindrischen Rundzelle, und

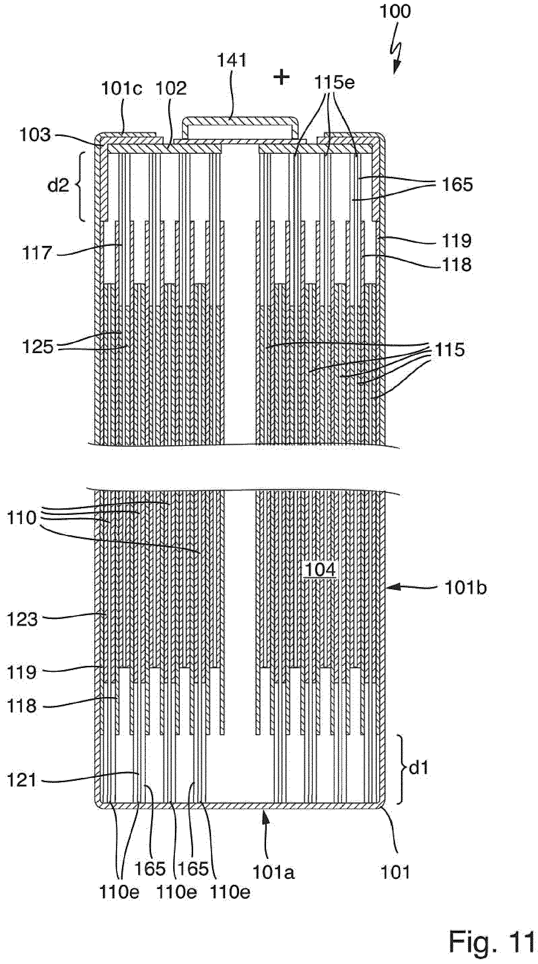

Fig. 11 eine Illustration eines erfindungsgemäßen Verfahrens zur Herstellung der in Fig. 11 dargestellten Zelle.

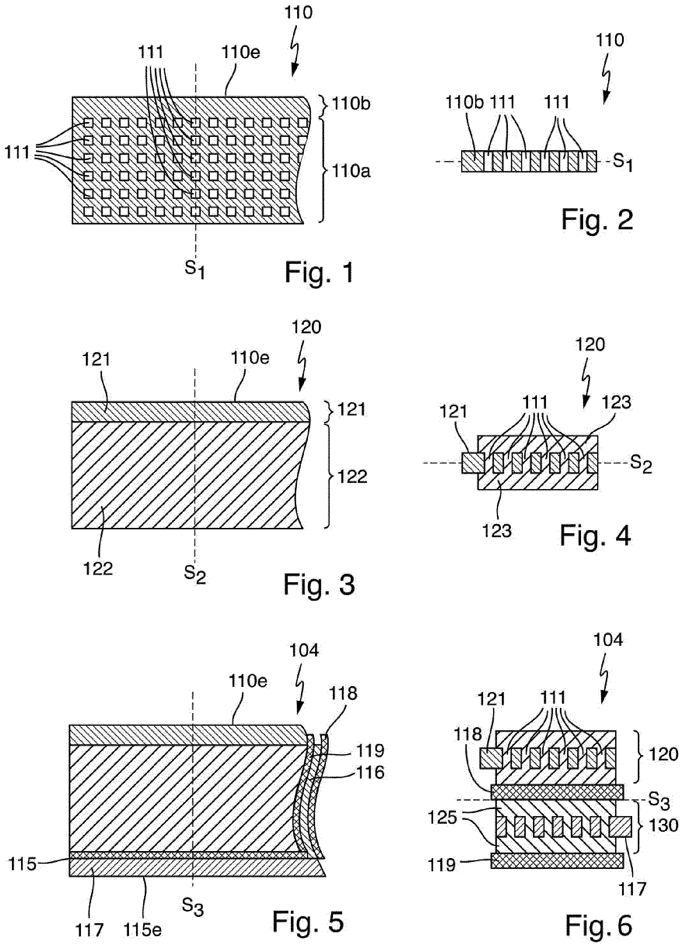

**Fig. 1** und **Fig. 2** veranschaulichen das Design eines Stromkollektors 110, der in einer erfindungsgemäßen Zelle verwendet werden kann. Bei Fig. 2 handelt es sich um einen Schnitt entlang S₁. Der Stromkollektor 110 umfasst eine Vielzahl Durchbrechungen 111, bei denen es sich um rechteckige Löcher handelt. Der Bereich 110a ist durch die Durchbrechungen 111 gekennzeichnet, wohingegen sich im Bereich 110b entlang des Längsrands 110e keine Durchbrechungen finden. Der Stromkollektor 110 weist daher im Bereich 110a ein deutlich geringeres Flächengewicht auf als im Bereich 110b.

**Fig. 3** und **Fig. 4** veranschaulichen eine Anode 120, die unter beidseitigem Auftrag eines negativen Elektrodenmaterials 123 auf den in Fig. 2 und Fig. 3 dargestellten Stromkollektor 110 gefertigt wurde. Bei Fig. 5 handelt es sich um einen Schnitt entlang S2. Der Stromkollektor 110 weist nun einen bandförmigen Hauptbereich 122 auf, der mit einer Schicht aus dem negativen Elektrodenmaterial 123 beladen ist, sowie einen freien Randstreifen 121, der sich entlang des Längsrands 110e erstreckt und der nicht mit dem Elektrodenmaterial 123 beladen ist. Das Elektrodenmaterial 123 befüllt darüber hinaus auch die Durchbrechungen 111.

**Fig. 5** und **Fig. 6** veranschaulichen einen Elektroden-Separator-Verbund 104, der unter Verwendung der in Fig. 4 und Fig. 5 dargestellten Anode 120 gefertigt wurde. Daneben umfasst er die Kathode 115 sowie die Separatoren 118 und 119. Bei Fig. 6 handelt es sich um einen Schnitt entlang S3. Die Kathode 115 baut auf dem gleichen Stromkollektordesign auf wie die Anode 120. Bevorzugt unterscheiden sich die Stromkollektoren 110 und 115 von Anode 120 und Kathode 130 nur durch die jeweilige Materialauswahl. So umfasst der Stromkollektor 115 der Kathode 130 einen bandförmigen Hauptbereich 116, der mit einer Schicht aus positivem Elektrodenmaterial 125 beladen ist, sowie einen freien Randstreifen 117, der sich entlang des Längsrands 115e erstreckt und der nicht mit dem Elektrodenmaterial 125 beladen ist. Durch spiralförmiges Aufwickeln kann der Elektroden-Separator-Verbund 104 in einen Wickel überführt werden, wie er in einer erfindungsgemäßen Zelle enthalten sein kann.

Die freien Randstreifen 117 und 121 sind in einigen bevorzugten Ausführungsformen beidseitig sowie zumindest bereichsweise mit einem der oben beschriebenen Stützmaterialien beschichtet.

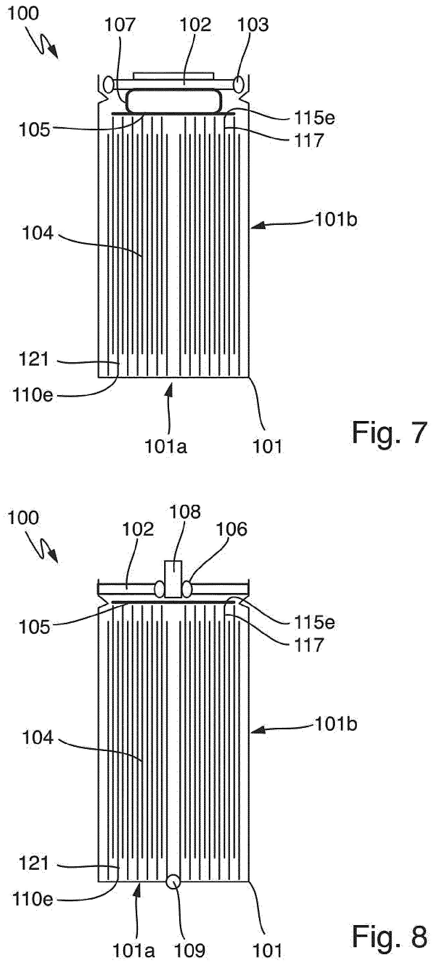

In **Fig. 7** ist ist eine Zelle 100 mit einem Gehäuse aus einem ersten Gehäuseteil 101 und einem zweiten Gehäuseteil 102 dargestellt. In dem Gehäuse ist der Elektroden-Separator-Verbund 104 eingeschlossen. Das Gehäuse ist insgesamt zylindrisch ausgebildet, das Gehäuseteil 101 weist einen kreisrunden Boden 101a, einen hohlzylindrischen Mantel 101b und eine dem Boden 101a gegenüberliegende kreisrunde Öffnung auf. Das Gehäuseteil 102 dient zum Verschließen der kreisrunden Öffnung und ist als kreisrunder Deckel ausgebildet. Der Elektroden-Separator-Verbund 104 liegt in Form eines zylindrischen Wickels mit zwei endständigen Stirnseiten vor.

Im Falle prismatischer Gehäuse könnte ein Schnitt durch die Zelle exakt gleich aussehen. Das Gehäuseteil 101 hätte in diesem Falle einen rechteckigen Boden 101a, eine rechteckige Seitenwand 101b und einen rechteckigen Querschnitt sowie eine rechteckige Öffnung, das Gehäuseteil 102 wäre zum Verschließen der rechteckigen Öffnung als rechteckiger Deckel ausgebildet. Und das Bezugszeichen 104 würde in diesem Fall keinen Elektroden-Separator-Verbund in zylindrischer Form sondern einen Stapel aus mehreren identischen Elektroden-Separator-Verbünden oder einen prismatischen Wickel bezeichnen.

Aus einer Stirnseite des Elektroden-Separator-Verbunds 104 tritt der freie Randstreifen 121 eines Anodenstromkollektors 110 aus, aus der anderen Stirnseite der freie Randstreifen 117 eines Kathodenstromkollektors 115. Der Rand 110e des Anodenstromkollektors 110 steht über seine gesamte Länge in unmittelbarem Kontakt mit dem Boden 101a des Gehäuseteils 101 und ist mit diesem mindestens über mehrere Abschnitte, bevorzugt über seine gesamte Länge, durch Verschweißung verbunden. Der Rand 115e des Kathodenstromkollektors 115 steht über seine gesamte Länge in unmittelbarem Kontakt mit der Kontaktplatte 105 und ist mit dieser mindestens über mehrere Abschnitte, bevorzugt über seine gesamte Länge, durch Verschweißung verbunden.

Die Kontaktplatte 105 ist wiederum über den elektrischen Leiter 107 elektrisch mit dem Gehäuseteil 102 verbunden. Bevorzugt besteht zwischen dem Leiter 107 und der Kontaktplatte 105 auf der einen und dem Leiter 107 und dem Gehäuseteil 102 auf der anderen Seite jeweils eine Schweißverbindung.

Der besseren Übersicht wegen sind - abgesehen von den Stromkollektoren 110 und 115 - keine weiteren Komponenten des Elektroden-Separator-Verbunds 104 (insbesondere Separatoren und Elektrodenmaterialien) dargestellt.

Die Gehäuseteile 101 und 102 sind durch die Dichtung 103 elektrisch voneinander isoliert. Das Gehäuse ist beispielsweise durch Bördelung verschlossen. Das Gehäuseteil 101 bildet den Minuspol und das Gehäuseteil 102 den Pluspol der Zelle 100.

In **Fig. 8** ist eine Zelle 100 mit einem Gehäuse aus einem ersten Gehäuseteil 101 und einem zweiten Gehäuseteil 102 dargestellt. In dem Gehäuse ist der Elektroden-Separator-Verbund 104 eingeschlossen. Das Gehäuse ist insgesamt zylindrisch ausgebildet, das Gehäuseteil 101 weist einen kreisrunden Boden 101a, einen hohlzylindrischen Mantel 111b und eine dem Boden 101a gegenüberliegende kreisrunde Öffnung auf. Das Gehäuseteil 102 dient zum Verschließen der kreisrunden Öffnung und ist als kreisrunder Deckel ausgebildet. Der Elektroden-Separator-Verbund 104 liegt in Form eines zylindrischen Wickels mit zwei endständigen Stirnseiten vor.

Im Falle prismatischer Gehäuse könnte ein Schnitt durch die Zelle exakt gleich aussehen. Das Gehäuseteil 101 hätte in diesem Falle einen rechteckigen Boden 101a, eine rechteckige Seitenwand 101b und einen rechteckigen Querschnitt sowie eine rechteckige Öffnung, das Gehäuseteil 102 wäre zum Verschließen der rechteckigen Öffnung als rechteckiger Deckel ausgebildet. Und das Bezugszeichen 104 würde in diesem Fall keinen Elektroden-Separator-Verbund in zylindrischer Form sondern einen Stapel aus mehreren identischen Elektroden-Separator-Verbünden oder einen prismatischen Wickel bezeichnen.

Aus einer Stirnseite des Elektroden-Separator-Verbunds 104 tritt der freie Randstreifen 121 eines Anodenstromkollektors 110 aus, aus der anderen Stirnseite der freie Randstreifen 117 eines Kathodenstromkollektors 115. Der Rand 110e des Anodenstromkollektors 110 steht über seine gesamte Länge in unmittelbarem Kontakt mit dem Boden 101a des Gehäuseteils 101 und ist mit diesem mindestens über mehrere Abschnitte, bevorzugt über seine gesamte Länge, durch Verschweißung verbunden. Der Rand 115e des Kathodenstromkollektors 115 steht über seine gesamte Länge in unmittelbarem Kontakt mit der Kontaktplatte 105 und ist mit dieser mindestens über mehrere Abschnitte, bevorzugt über seine gesamte Länge, durch Verschweißung verbunden.

Die Kontaktplatte 105 ist unmittelbar mit dem metallischen Polbolzen 108 verbunden, bevorzugt verschweißt. Dieser ist durch eine Durchbrechung in dem Gehäuseteil 102 aus dem Gehäuse herausgeführt und mittels der elektrischen Isolierung 106 gegen das Gehäuseteil 102 isoliert. Der Polbolzen 108 und die elektrische Isolierung 106 bilden gemeinsam eine Poldurchführung.

Der besseren Übersicht wegen sind - abgesehen von den Stromkollektoren 110 und 115 - auch hier keine weiteren Komponenten des Elektroden-Separator-Verbunds 104 (insbesondere Separatoren und Elektrodenmaterialien) dargestellt.

Im Boden 101a findet sich ein beispielsweise mittels Verlötung, Verschweißung oder Verklebung verschlossenes Loch 109, das beispielsweise zur Einbringung von Elektrolyt in das Gehäuse dienen kann. Alternativ hätte man zum gleichen Zweck auch ein Loch in das Gehäuseteil 102 einbringen können.

Das Gehäuseteil 102 ist in die kreisrunde Öffnung des Gehäuseteils 101 eingeschweißt. Die Gehäuseteile 101 und 102 weisen also dieselbe Polarität auf und bilden den Minuspol der Zelle 100. Der Polbolzen 108 bildet den Pluspol der Zelle 100.

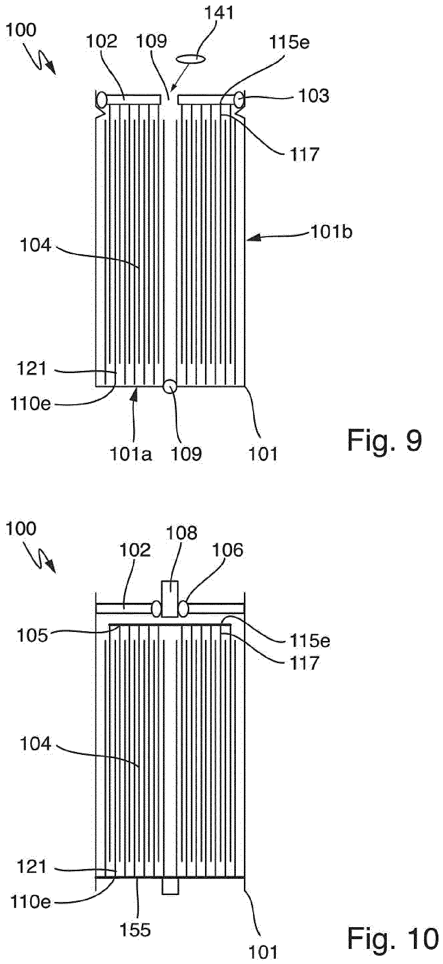

In **Fig. 9** ist eine Zelle 100 mit einem Gehäuse aus einem ersten Gehäuseteil 101 und einem zweiten Gehäuseteil 102 dargestellt. In dem Gehäuse ist der Elektroden-Separator-Verbund 104 eingeschlossen. Das Gehäuse ist insgesamt zylindrisch ausgebildet, das Gehäuseteil 101 weist einen kreisrunden Boden 101a, einen hohlzylindrischen Mantel 111b und eine dem Boden 101a gegenüberliegende kreisrunde Öffnung auf. Das Gehäuseteil 102 dient zum Verschließen der kreisrunden Öffnung und ist als kreisrunder Deckel ausgebildet. Der Elektroden-Separator-Verbund 104 liegt in Form eines zylindrischen Wickels mit zwei endständigen Stirnseiten vor.

Im Falle prismatischer Gehäuse könnte ein Schnitt durch die Zelle exakt gleich aussehen. Das Gehäuseteil 101 hätte in diesem Falle einen rechteckigen Boden 101a, eine rechteckige Seitenwand 101b und einen rechteckigen Querschnitt sowie eine rechteckige Öffnung, das Gehäuseteil 102 wäre zum Verschließen der rechteckigen Öffnung als rechteckiger Deckel ausgebildet. Und das Bezugszeichen 104 würde in diesem Fall keinen Elektroden-Separator-Verbund in zylindrischer Form sondern einen Stapel aus mehreren identischen Elektroden-Separator-Verbünden oder einen prismatischen Wickel bezeichnen.

Aus einer Stirnseite des Elektroden-Separator-Verbunds 104 tritt der freie Randstreifen 121 eines Anodenstromkollektors 110 aus, aus der anderen Stirnseite der freie Randstreifen 117 eines Kathodenstromkollektors 115. Der Rand 110e des Anodenstromkollektors 110 steht über seine gesamte Länge in unmittelbarem Kontakt mit dem Boden 101a des Gehäuseteils 101 und ist mit diesem mindestens über mehrere Abschnitte, bevorzugt über seine gesamte Länge, durch Verschweißung verbunden. Der Rand 115e des Kathodenstromkollektors 115 steht über seine gesamte Länge in unmittelbarem Kontakt mit dem Gehäuseteil 102 und ist mit dieser mindestens über mehrere Abschnitte, bevorzugt über seine gesamte Länge, durch Verschweißung verbunden.

Der besseren Übersicht wegen sind - abgesehen von den Stromkollektoren 110 und 115 - auch hier keine weiteren Komponenten des Elektroden-Separator-Verbunds 104 (insbesondere Separatoren und Elektrodenmaterialien) dargestellt.

Im Boden 101a findet sich ein beispielsweise mittels Verlötung, Verschweißung oder Verklebung verschlossenes Loch 109, das beispielsweise zur Einbringung von Elektrolyt in das Gehäuse dienen kann. Ein weiteres Loch 109, das dem gleichen Zweck dienen kann, findet sich hier im Gehäuseteil 102. Bevorzugt wird diese mit dem Überdruckventil 141 verschlossen, das auf das Gehäuseteil 102 beispielsweise aufgeschweißt werden kann.

Die dargestellten Löcher 109 werden in der Regel nicht beide benötigt. In vielen Fällen weist die in Fig. 9 dargestellte Zelle 100 daher nur eines der beiden Löcher auf.

Die Gehäuseteile 101 und 102 sind durch die Dichtung 103 elektrisch voneinander isoliert. Das Gehäuse ist beispielsweise durch Bördelung verschlossen. Das Gehäuseteil 101 bildet den Minuspol und das Gehäuseteil 102 den Pluspol der Zelle 100.

In **Fig. 10** ist eine Zelle 100 mit einem Gehäuse aus einem ersten Gehäuseteil 101 und einem zweiten Gehäuseteil 102 und einem dritten Gehäuseteil 155 dargestellt. In dem Gehäuse ist der Elektroden-Separator-Verbund 104 eingeschlossen. Das Gehäuse ist insgesamt zylindrisch ausgebildet, das Gehäuseteil 101 ist hierbei als Hohlzylinder mit zwei stirnseitigen kreisrunden Öffnungen ausgebildet. Die Gehäuseteile 102 und 155 dienen zum Verschließen der kreisrunden Öffnungen und sind als kreisrunde Deckel ausgebildet. Der Elektroden-Separator-Verbund 104 liegt in Form eines zylindrischen Wickels mit zwei endständigen Stirnseiten vor.

Im Falle prismatischer Gehäuse könnte ein Schnitt durch die Zelle exakt gleich aussehen. Das Gehäuseteil 101 hätte in diesem Falle einen rechteckigen Querschnitt sowie zwei rechteckige Öffnungen, die Gehäuseteile 102 und 155 wären zum Verschließen der rechteckigen Öffnungen als rechteckige Deckel ausgebildet. Und das Bezugszeichen 104 würde in diesem Fall keinen Elektroden-Separator-Verbund in zylindrischer Form sondern einen Stapel aus mehreren identischen Elektroden-Separator-Verbünden oder einen prismatischen Wickel bezeichnen.

Aus einer Stirnseite des Elektroden-Separator-Verbunds 104 tritt der freie Randstreifen 121 eines Anodenstromkollektors 110 aus, aus der anderen Stirnseite der freie Randstreifen 117 eines Kathodenstromkollektors 115. Der Rand 110e des Anodenstromkollektors 110 steht über seine gesamte Länge in unmittelbarem Kontakt mit dem Gehäuseteil 155 und ist mit diesem mindestens über mehrere Abschnitte, bevorzugt über seine gesamte Länge, durch Verschweißung verbunden. Das Gehäuseteil 155 fungiert damit auch als Kontaktplatte im Sinne der Erfindung. Der Rand 115e des Kathodenstromkollektors 115 steht über seine gesamte Länge in unmittelbarem Kontakt mit der Kontaktplatte 105 und ist mit dieser mindestens über mehrere Abschnitte, bevorzugt über seine gesamte Länge, durch Verschweißung verbunden.

Der besseren Übersicht wegen sind - abgesehen von den Stromkollektoren 110 und 115 - auch hier keine weiteren Komponenten des Elektroden-Separator-Verbunds 104 (insbesondere Separatoren und Elektrodenmaterialien) dargestellt.

Die Kontaktplatte 105 ist unmittelbar mit dem metallischen Polbolzen 108 verbunden, bevorzugt verschweißt. Dieser ist durch eine Durchbrechung in dem Gehäuseteil 102 aus dem Gehäuse herausgeführt und mittels der elektrischen Isolierung 106 gegen das Gehäuseteil 102 isoliert. Der Polbolzen 108 und die elektrische Isolierung 106 bilden gemeinsam eine Poldurchführung.

Im Gehäuseteil 102 findet sich ein beispielsweise mittels Verlötung, Verschweißung oder Verklebung verschlossenes Loch 109, das beispielsweise zur Einbringung von Elektrolyt in das Gehäuse dienen kann. Alternativ hätte man zum gleichen Zweck auch ein Loch in das Gehäuseteil 155 einbringen können.

Die Gehäuseteile 102 und 155 sind in die kreisrunden Öffnungen des Gehäuseteils 101 eingeschweißt. Die Gehäuseteile 101, 102 und 155 weisen also dieselbe Polarität auf und bilden den Minuspol der Zelle 100. Der Polbolzen 108 bildet den Pluspol der Zelle 100.

In **Fig. 11** ist eine Zelle 100 mit einem Gehäuse aus einem ersten Gehäuseteil 101 und einem zweiten Gehäuseteil 102 dargestellt. In dem Gehäuse ist der Elektroden-Separator-Verbund 104 eingeschlossen. Das Gehäuse ist insgesamt zylindrisch ausgebildet, das Gehäuseteil 101 weist einen kreisrunden Boden 101a, einen hohlzylindrischen Mantel 111b und eine dem Boden 101a gegenüberliegende kreisrunde Öffnung auf. Das Gehäuseteil 102 dient zum Verschließen der kreisrunden Öffnung und ist als kreisrunder Deckel ausgebildet. Der Elektroden-Separator-Verbund 104 liegt in Form eines zylindrischen Wickels mit zwei endständigen Stirnseiten vor.

Im Falle prismatischer Gehäuse könnte ein Schnitt durch die Zelle exakt gleich aussehen. Das Gehäuseteil 101 hätte in diesem Falle einen rechteckigen Boden 101a, eine rechteckige Seitenwand 101b und einen rechteckigen Querschnitt sowie eine rechteckige Öffnung, das Gehäuseteil 102 wäre zum Verschließen der rechteckigen Öffnung als rechteckiger Deckel ausgebildet. Und das Bezugszeichen 104 würde in diesem Fall keinen Elektroden-Separator-Verbund in zylindrischer Form sondern einen Stapel aus mehreren identischen Elektroden-Separator-Verbünden oder einen prismatischen Wickel bezeichnen.

Aus einer Stirnseite des Elektroden-Separator-Verbunds 104 tritt der freie Randstreifen 121 eines Anodenstromkollektors 110 aus, aus der anderen Stirnseite der freie Randstreifen 117 eines Kathodenstromkollektors 115. Der Rand 110e des Anodenstromkollektors 110 steht über seine gesamte Länge in unmittelbarem Kontakt mit dem Boden 101a des Gehäuseteils 101 und ist mit diesem mindestens über mehrere Abschnitte, bevorzugt über seine gesamte Länge, durch Verschweißung verbunden.

Der Rand 115e des Kathodenstromkollektors 115 steht über seine gesamte Länge in unmittelbarem Kontakt mit dem Gehäuseteil 102 und ist mit dieser mindestens über mehrere Abschnitte, bevorzugt über seine gesamte Länge, durch Verschweißung verbunden. Das Gehäuseteil 102 dient hier somit gleichzeitig als Kontaktplatte.

Der Anodenstromkollektor 110 ist beidseitig mit einer Schicht aus negativem Elektrodenmaterial 123 beladen, weist jedoch einen freien Randstreifen 121 auf, der sich entlang des Längsrands 110e erstreckt und der nicht mit dem Elektrodenmaterial 123 beladen ist. Stattdessen ist der freie Randstreifen 121 beidseitig mit einem keramischen Stützmaterial 165 beschichtet.

Der Kathodenstromkollektor 115 ist beidseitig mit einer Schicht aus negativem Elektrodenmaterial 125 beladen, weist jedoch einen freien Randstreifen 117 auf, der sich entlang des Längsrands 115e erstreckt und der nicht mit dem Elektrodenmaterial 125 beladen ist. Stattdessen ist der freie Randstreifen 117 beidseitig mit einem keramischen Stützmaterial 165 beschichtet.

Der Elektroden-Separator-Verbund 104 weist zwei Stirnseiten auf, die durch die Längsränder 118a und 119a sowie 118b und 119b der Separatoren 118 und 119 gebildet werden. Aus diesen Stirnseiten ragen die Längsränder der Stromkollektoren 110 und 115 hervor. Die entsprechenden Überstände sind mit d1 und d2 bezeichnet.

Im Gehäuseteil 102 findet sich ein Loch 109, das beispielsweise zur Einbringung von Elektrolyt in das Gehäuse dienen kann. Das Loch ist mit dem Überdruckventil 141 verschlossen, das mit dem Gehäuseteil 102 beispielsweise durch Verschweißung verbunden ist.

Die Gehäuseteile 101 und 102 sind durch die Dichtung 103 elektrisch voneinander isoliert. Das Gehäuse ist durch Bördelung verschlossen. Hierzu ist der Öffnungsrand 101c des Gehäuseteils radial nach innen umgebogen. Das Gehäuseteil 101 bildet den Minuspol und das Gehäuseteil 102 den Pluspol der Zelle 100.

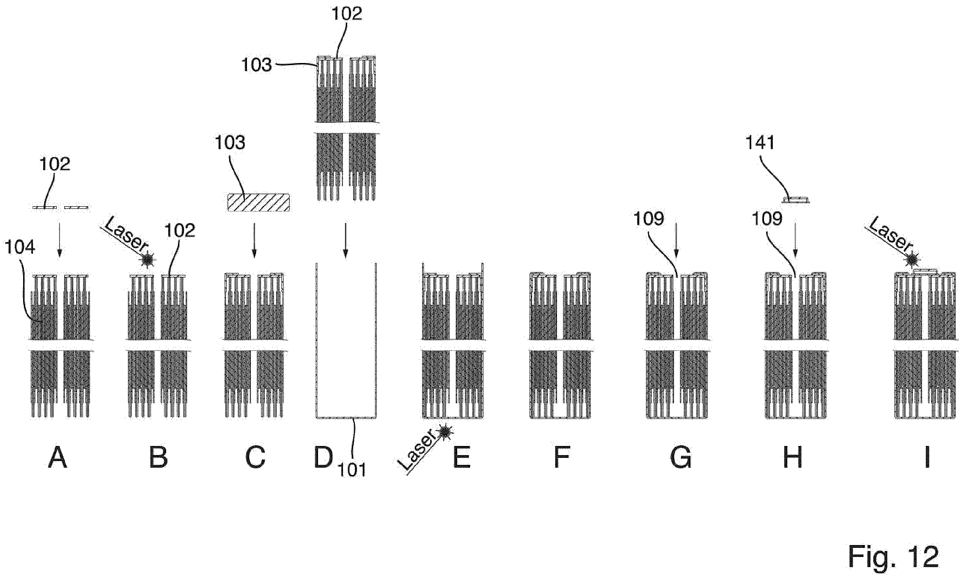

Zur Herstellung der in Fig. 11 dargestellten Zelle kann gemäß **Fig. 12** vorgegangen werden, die einzelnen Verfahrensschritte A bis I sind im Folgenden beschrieben. Zunächst wird der Elektroden-Separator-Verbund 104 bereitgestellt, auf dessen obere Stirnseite das als Kontaktplatte dienende Gehäuseteil 102 aufgelegt wird. Dieses wird im Schritt B mit dem Längsrand 115e des Kathodenstromkollektors 115 verschweißt. Im Schritt C wird die umlaufende Dichtung 103 auf den Rand des Gehäuseteils 102 aufgezogen. Mit diesem wird im Schritt D der Elektroden-Separator-Verbund 104 in das Gehäuseteil 101 soweit eingeschoben, bis der Längsrand 110e des Anodenstromkollektors 110 in unmittelbarem Kontakt mit dem Boden 101a des Gehäuseteils 101 steht. Im Schritt E wird dieser mit dem Boden 101a des Gehäuseteils 101 verschweißt. Im Schritt F erfolgt durch Bördelung der Verschlussdes Gehäuses. Hierzu wird der der Öffnungsrand 101c des Gehäuseteils 101 radial nach innen umgebogen. Im Schritt G erfolgt eine Befüllung des Gehäuses mit Elektrolyt, der durch die Öffnung 109 in das Gehäuse eindosiert wird. Die Öffnung 109 wird in den Schritten H und I mittels des Überdruckventils 141, das auf das Gehäuseteil 102 aufgeschweißt wird, verschlossen.

## Patentansprüche

1. Lithium-Ionen-Zelle (100) mit den Merkmalen
a. die Zelle umfasst einen bandförmigen Elektroden-Separator-Verbund (104) mit der Sequenz Anode (120) / Separator (118) / Kathode (130),
b. die Anode (120) umfasst einen bandförmigen Anodenstromkollektor (110) mit einem ersten Längsrand (110e) und einem zweiten Längsrand und zwei Endstücken,
c. der Anodenstromkollektor (110) weist einen bandförmigen Hauptbereich (122), der mit einer Schicht aus negativem Elektrodenmaterial (123) beladen ist, sowie einen freien Randstreifen (121), der sich entlang des ersten Längsrands (110e) erstreckt und der nicht mit dem Elektrodenmaterial (123) beladen ist, auf,
d. die Kathode (130) umfasst einen bandförmigen Kathodenstromkollektor (115) mit einem ersten Längsrand (115e) und einem zweiten Längsrand und zwei Endstücken,
e. der Kathodenstromkollektor (115) weist einen bandförmigen Hauptbereich (116), der mit einer Schicht aus positivem Elektrodenmaterial (125) beladen ist, sowie einen freien Randstreifen (117), der sich entlang des ersten Längsrands (115e) erstreckt und der nicht mit dem Elektrodenmaterial (125) beladen ist, auf,
f. der Elektroden-Separator-Verbund (104) liegt in Form eines Wickels mit zwei endständigen Stirnseiten vor oder ist Bestandteil eines Stapels, der aus zwei oder mehr identischen Elektroden-Separator-Verbünden (104) gebildet ist und gleichfalls zwei endständige Seiten aufweist,
g. die Elektroden-Separator-Verbund (104) ist, gegebenenfalls mitsamt dem oder den weiteren identischen Elektroden-Separator-Verbünden des Stapels, von einem Gehäuse umschlossen,
h. die Anode (120) und die Kathode (130) sind innerhalb des Elektroden-Separator-Verbunds (104) versetzt angeordnet, so dass der erste Längsrand (110e) des Anodenstromkollektors (110) aus einer der endständigen Stirnseiten oder Seiten des Stapels und der erste Längsrand (115e) des Kathodenstromkollektors (115) aus der anderen der endständigen Stirnseiten oder Seiten des Stapels austritt,
h. die Zelle weist eine metallische Kontaktplatte (101a, 102, 155) auf, mit der einer der ersten Längsränder (110e, 115e) in unmittelbarem Kontakt steht, und
i. die Kontaktplatte 101a, 102, 155) ist mit diesem Längsrand (110e, 115e) durch Verschweißung verbunden,
sowie dem zusätzlichen kennzeichnenden Merkmal
j. ein Teil (101a) des Gehäuses dient als die Kontaktplatte und/oder die Kontaktplatte (102, 155) bildet einen Teil des Gehäuses, das den Elektroden-Separator-Verbund (104) umschließt.

2. Zelle nach Anspruch 1 mit den folgenden zusätzlichen Merkmalen:
a. Das Gehäuse umfasst ein becherförmiges erstes Gehäuseteil (101) mit einem Boden (101a) und einer umlaufenden Seitenwand (101b) und einer Öffnung und ein zweites Gehäuseteil (102), das die Öffnung verschließt.
b. Die Kontaktplatte ist der Boden (101a) des ersten Gehäuseteils (101).

3. Zelle nach Anspruch 2 mit den folgenden zusätzlichen Merkmalen:
a. Die Zelle (100) weist eine metallische Kontaktplatte (101a) auf, mit derdererste Längsrand (110e) des Anodenstromkollektors (110) in unmittelbarem Kontakt steht und mit der dieser Längsrand (110e) durch Verschweißung verbunden ist.
b. Die Zelle (100) weist eine metallische Kontaktplatte (105) auf, mit der der erste Längsrand (115e) des Kathodenstromkollektors (115) in unmittelbarem Kontakt steht und mit der dieser Längsrand (115e) durch Verschweißung verbunden ist.
c. Eine der Kontaktplatten ist der Boden (101a) des ersten Gehäuseteils (101).
d. Die andere der Kontaktplatten (105) ist über einen elektrischen Leiter (107) mit dem zweiten Gehäuseteil (102) verbunden.
e. Die Zelle (100) umfasst eine elektrische Dichtung (103), welche das erste Gehäuseteil (101) und das zweite Gehäuseteil (102) elektrisch voneinander isoliert.

4. Zelle nach Anspruch 2 mit den folgenden zusätzlichen Merkmalen:
a. Die Zelle (100) weist eine metallische Kontaktplatte (101a) auf, mit derdererste Längsrand (110e) des Anodenstromkollektors (110) in unmittelbarem Kontakt steht und mit der dieser Längsrand (110e) durch Verschweißung verbunden ist.
b. Die Zelle (100) weist eine metallische Kontaktplatte (105) auf, mit der der erste Längsrand (115e) des Kathodenstromkollektors (115) in unmittelbarem Kontakt steht und mit der dieser Längsrand (115e) durch Verschweißung verbunden ist.
c. Eine der Kontaktplatten ist der Boden (101a) des ersten Gehäuseteils (101).
d. Das zweite Gehäuseteil (102) ist in die Öffnung des ersten Gehäuseteils (101) eingeschweißt und umfasst eine Poldurchführung, durch welche ein elektrischer Leiter (108) aus dem Gehäuse herausgeführt ist.
e. Die andere (105) der Kontaktplatten ist mit diesem elektrischen Leiter (108) elektrisch verbunden.

5. Zelle nach Anspruch 2 mit den folgenden zusätzlichen Merkmalen:
a. Die Zelle (100) weist eine metallische Kontaktplatte (101a) auf, mit derdererste Längsrand (110e) des Anodenstromkollektors (110) in unmittelbarem Kontakt steht und mit der dieser Längsrand (110e) durch Verschweißung verbunden ist.
b. Die Zelle (100) weist eine metallische Kontaktplatte (102) auf, mit der der erste Längsrand (115e) des Kathodenstromkollektors (115) in unmittelbarem Kontakt steht und mit der dieser Längsrand (115e) durch Verschweißung verbunden ist.
c. Eine der Kontaktplatten ist der Boden (101a) des ersten Gehäuseteils (101).
d. Die andere der Kontaktplatten ist das zweite Gehäuseteil (102).
e. Die Zelle (100) umfasst eine elektrische Dichtung (103), welche das erste Gehäuseteil (101) und das zweite Gehäuseteil (102) elektrisch voneinander isoliert.

6. Zelle nach Anspruch 1 mit den folgenden zusätzlichen Merkmalen:
a. Das Gehäuse umfasst ein rohrförmiges erstes Gehäuseteil (101) mit zwei endständigen Öffnungen, ein zweites Gehäuseteil (102), das eine der Öffnungen verschließt und ein drittes Gehäuseteil (155), das die andere der Öffnungen verschließt.
b. Die Kontaktplatte ist das zweite Gehäuseteil (102) oder das dritte Gehäuseteil (155).

7. Zelle nach Anspruch 6 mit den folgenden zusätzlichen Merkmalen:
a. Die Zelle (100) weist eine metallische Kontaktplatte (155) auf, mit der der erste Längsrand (110e) des Anodenstromkollektors (110) in unmittelbarem Kontakt steht und mit der dieser Längsrand (110e) durch Verschweißung verbunden ist.
b. Die Zelle (100) weist eine metallische Kontaktplatte (105) auf, mit der der erste Längsrand (115e) des Kathodenstromkollektors (115) in unmittelbarem Kontakt steht und mit der dieser Längsrand (115e) durch Verschweißung verbunden ist.
c. Eine der Kontaktplatten (155) ist in eine der endständigen Öffnungen des ersten Gehäuseteils (101) eingeschweißt und ist das zweite Gehäuseteil.
d. Das dritte Gehäuseteil (102) ist in die andere der endständigen Öffnungen des ersten Gehäuseteils eingeschweißt und umfasst eine Poldurchführung, durch welche ein elektrischer Leiter (108) aus dem Gehäuse herausgeführt ist.
e. Die andere der Kontaktplatten (105) ist mit diesem elektrischen Leiter (108) elektrisch verbunden.

8. Zelle nach Anspruch 6 mit den folgenden zusätzlichen Merkmalen:
a. Die Zelle weist eine metallische Kontaktplatte auf, mit der der erste Längsrand des Anodenstromkollektors in unmittelbarem Kontakt steht und mit der dieser Längsrand durch Verschweißung verbunden ist.
b. Die Zelle weist eine metallische Kontaktplatte auf, mit der der erste Längsrand des Kathodenstromkollektors in unmittelbarem Kontakt steht und mit der dieser Längsrand durch Verschweißung verbunden ist.
c. Eine der Kontaktplatten ist in eine der endständigen Öffnungen des ersten Gehäuseteils eingeschweißt und ist das zweite Gehäuseteil.
d. Die andere der Kontaktplatten verschließt als drittes Gehäuseteil die andere der endständigen Öffnungen des ersten Gehäuseteils und ist mittels einer Dichtung von dem ersten Gehäuseteil isoliert.

9. Verfahren zur Herstellung einer Zelle (100) mit den Merkmalen eines der Ansprüche 1 bis 8, umfassend die folgenden Schritte:
a. Bereitstellung des Elektroden-Separator-Verbundes (104) mit den endständigen Seiten oder Stirnseiten, aus denen der erste Längsrand (110e) des Anodenstromkollektors (110) und der der erste Längsrand (115e) des Kathodenstromkollektors (115) austreten,
b. Bereitstellen der metallischen Kontaktplatte (155, 101a, 102) zur elektrischen Kontaktierung eines der ersten Längsränder (110e, 115e),
c. Verschweißen dieses Längsrandes (110e, 115e) mit der Kontaktplatte (155, 101a, 102),
wobei
d. als Kontaktplatte (101a) ein Teil eines Gehäuseteils (101a) dient, das den Elektroden-Separator-Verbund (104) umschließt, oder die Kontaktplatte (155, 102) mit mindestens einem weiteren Gehäuseteil (101) zu einem Gehäuse verbunden wird, das den Elektroden-Separator-Verbund (104) umschließt.

10. Verfahren nach Anspruchs 9, umfassend die folgenden zusätzlichen Schritte und/oder Merkmale:
a. Es wird ein becherförmiges erstes Gehäuseteil (101) mit einem Boden (101a) und einer umlaufenden Seitenwand und einer Öffnung bereitgestellt.
b. Der Elektroden-Separator-Verbund (104) wird in das becherförmige Gehäuse (101) eingeschoben bis der erste Längsrand (110e) des Anodenstromkollektors (110) oder der der erste Längsrand des Kathodenstromkollektors in unmittelbarem Kontakt mit dem Boden (101a) stehen.
c. Verschweißen dieses Längsrandes (110e) mit dem Boden (101a) des ersten Gehäuseteils (101).
d. Verschließen der Öffnung des ersten Gehäuseteils (101) mit einem zweiten, bevorzugt kreisrunden Gehäuseteil (102).

11. Verfahren nach Anspruch 9, umfassend die folgenden zusätzlichen Schritte und/oder Merkmale:
a. Der Elektroden-Separator-Verbund (104) wird bereitgestellt.
b. Eine metallische Kontaktplatte (155) wird mit dem ersten Längsrand (110e) des Anodenstromkollektors (110) unmittelbar in Kontakt gebracht und mit diesem Längsrand (110e) verschweißt.
c. Eine metallische Kontaktplatte (105) wird mit dem ersten Längsrand (115e) des Kathodenstromkollektors (115) unmittelbar in Kontakt gebracht und mit diesem Längsrand (115e) verschweißt.
d. Es wird ein rohrförmiges erstes Gehäuseteil (101) mit zwei stirnseitigen Öffnungen bereitgestellt.
e. Der Elektroden-Separator-Verbund (104) wird durch eine der stirnseitigen Öffnungen in das rohrförmige erste Gehäuseteil (101) eingeschoben.
f. Eine der Kontaktplatten (155) wird als zweites Gehäuseteil in eine der stirnseitigen Öffnungen des ersten Gehäuseteils (101) eingeschweißt.
g. Ein drittes Gehäuseteil (102), das eine Poldurchführung umfasst, durch welche ein elektrischer Leiter (108) aus dem Gehäuse herausgeführt werden kann, wird in die andere der stirnseitigen Öffnungen des ersten Gehäuseteils (101) eingeschweißt.

12. Verfahren nach einem der Ansprüche 9 bis 11, umfassend mindestens einen der folgenden zusätzlichen Schritte und/oder Merkmale:
a. Durch ein Loch (109) in einem der Gehäuseteile (101, 102) wird das Gehäuse mit einem Elektrolyten befüllt.
b. Das Loch (109) wird nach dem Befüllen durch Verschweißen, Verkleben, Vernieten oder Verlöten verschlossen.
